(19) Europäisches Patentamt
European Patent Office
Office européen des brevets

(11) **EP 3 621 294 B1**

(12) **EUROPEAN PATENT SPECIFICATION**

(45) Date of publication and mention
of the grant of the patent:
**22.02.2023 Bulletin 2023/08**

(21) Application number: **19806080.8**

(22) Date of filing: **12.04.2019**

(51) International Patent Classification (IPC):
**H04N 5/225** *(2006.01)*      **H04N 5/232** *(2006.01)*
**H04N 5/235** *(2006.01)*

(52) Cooperative Patent Classification (CPC):
**H04N 23/56; H04N 23/61; H04N 23/64;**
**H04N 23/667; H04N 23/74**

(86) International application number:
**PCT/CN2019/082560**

(87) International publication number:
**WO 2020/015403 (23.01.2020 Gazette 2020/04)**

(54) **METHOD AND DEVICE FOR IMAGE CAPTURE, COMPUTER READABLE STORAGE MEDIUM AND ELECTRONIC DEVICE**

VERFAHREN UND VORRICHTUNG ZUR BILDAUFNAHME, COMPUTERLESBARES SPEICHERMEDIUM UND ELEKTRONISCHE VORRICHTUNG

PROCÉDÉ ET DISPOSITIF DE CAPTURE D'IMAGE, SUPPORT DE STOCKAGE LISIBLE PAR ORDINATEUR ET DISPOSITIF ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.07.2018   CN 201810786074**
**16.07.2018   CN 201810779737**

(43) Date of publication of application:
**11.03.2020   Bulletin 2020/11**

(73) Proprietor: **GUANGDONG OPPO MOBILE TELECOMMUNICATIONS CORP., LTD.**
**Wusha, Chang'an**
**Dongguan,**
**Guangdong 523860 (CN)**

(72) Inventors:
• **AU, Kamwing**
**Dongguan**
**Guangdong 523860 (CN)**

• **ZHOU, Haitao**
**Dongguan**
**Guangdong 523860 (CN)**
• **GUO, Ziqing**
**Dongguan**
**Guangdong 523860 (CN)**
• **TAN, Xiao**
**Dongguan**
**Guangdong 523860 (CN)**

(74) Representative: **Manitz Finsterwald**
**Patent- und Rechtsanwaltspartnerschaft mbB**
**Martin-Greif-Strasse 1**
**80336 München (DE)**

(56) References cited:
WO-A1-2017/156784      CN-A- 103 425 357
CN-A- 104 883 510      CN-A- 106 331 453
CN-A- 106 850 964      CN-A- 107 341 481
CN-A- 107 426 560      CN-A- 107 729 836
CN-A- 108 123 793      CN-A- 108 833 885
CN-A- 108 924 421      CN-U- 205 545 391

## Description

### TECHNICAL FIELD

The present disclosure relates to a field of computer technology, and more particularly, to a method and a device for capturing an image, a computer readable storage medium and an electronic device.

### BACKGROUND

With a camera provided on an electronic device, a user may photograph a picture or a video. Further, the camera may capture an image for authentication operations, such as payment operation and unlock operation. Different types of cameras may be provided on the electronic device. Locations of the cameras on the electronic device may be different. The camera may be controlled to capture the image. For example, during the payment, a front camera may be used to capture the image. During the photographing, a rear camera may be used to capture the image.

CN 107 341 481 A discloses an identification device utilizing a structured light image. The device includes a projection module for emitting the structured light to a region including a face, an imaging module for collecting the structured light image including the face, and a processing circuit for performing face detection and identification by utilizing the structured light image. The structured light image is an infrared speckle image. CN 107 729 836 A discloses a mobile terminal including a rich execution environment (REE) and a trusted execution environment (TEE). CN 108 123 793 A discloses a serial peripheral interface (SPI) which can use encryption to operate as a secure serial peripheral interface (SSPI).

### SUMMARY

The invention is defined by the independent claims. The present application relates to a method for capturing an image according to independent claim 1, a computer readable storage medium according to independent claim 9 and an electronic device according to independent claim 10. Further aspects of the present application are defined by the dependent claims.

### BRIEF DESCRIPTION OF THE DRAWINGS

In order to more clearly illustrate embodiments of the present disclosure or technical solutions in the prior art, embodiments and drawings needed in describing the prior art may be briefly discussed. Obviously, drawings used in the following description are merely some embodiments of the present disclosure. For those skilled in the art, without any creative labors, other drawings may be obtained based on these drawings.

FIG. 1 is a schematic diagram illustrating an application scenario of a method for capturing an image according to an embodiment of the present disclosure.

FIG. 2 is a flow chart illustrating a method for capturing an image according to an embodiment of the present disclosure.

FIG. 3 is a flow chart illustrating a method for capturing an image according to another embodiment of the present disclosure.

FIG. 4 is a schematic diagram of controlling a light emitter according to an embodiment of the present disclosure.

FIG. 5 is a block diagram illustrating an electronic device for obtaining a target image according to the present invention.

FIG. 6 is a flow chart illustrating a method for capturing an image according to still another embodiment of the present disclosure.

FIG. 7 is a flow chart illustrating a method for capturing an image according to yet another embodiment of the present disclosure.

FIG. 8 is a schematic diagram illustrating a principle of calculating depth information according to an embodiment of the present disclosure.

FIG. 9 is a schematic diagram illustrating hardware for implementing a method for capturing an image according to an embodiment of the present disclosure.

FIG. 10 is a block diagram illustrating a device for capturing an image according to an embodiment of the present disclosure.

FIG. 11 is a flow chart illustrating a method for capturing an image according to an embodiment of the present disclosure.

FIG. 12 is a flow chart illustrating a method for capturing an image according to another embodiment of the present disclosure.

FIG. 13 is a schematic diagram of controlling a light emitter according to an embodiment of the present disclosure.

FIG. 14 is a block diagram illustrating an electronic device for obtaining a target image according to an embodiment of the present disclosure.

FIG. 15 is a flow chart illustrating a method for capturing an image according to another embodiment of the present disclosure.

FIG. 16 is a flow chart illustrating a method for capturing an image according to still another embodiment of the present disclosure.

FIG. 17 is a schematic diagram illustrating a connection state of an electronic device and a computer readable storage medium according to an embodiment of the present disclosure.

FIG. 18 is a block diagram illustrating an electronic device according to an embodiment of the present disclosure.

## DETAILED DESCRIPTION

In order to make the purpose, technical scheme and advantages of the present application clear, in the following a further detailed description of the present application may be made in conjunction with the drawings and embodiments. It should be understood, specific embodiments described herein are used only to interpret the present application and not to limit the present application.

It may be understood that terms "first", "second" used in this application may be used to describe various elements herein, but these elements may be not limited by these terms. These terms are used only to distinguish a first element from the other. For example, without departing from the scope of the present application, a first client may be referred to as a second client. Similarly, the second client may be referred to as the first client. The first client and the second client are both clients, but they are not the same client.

First Implementation

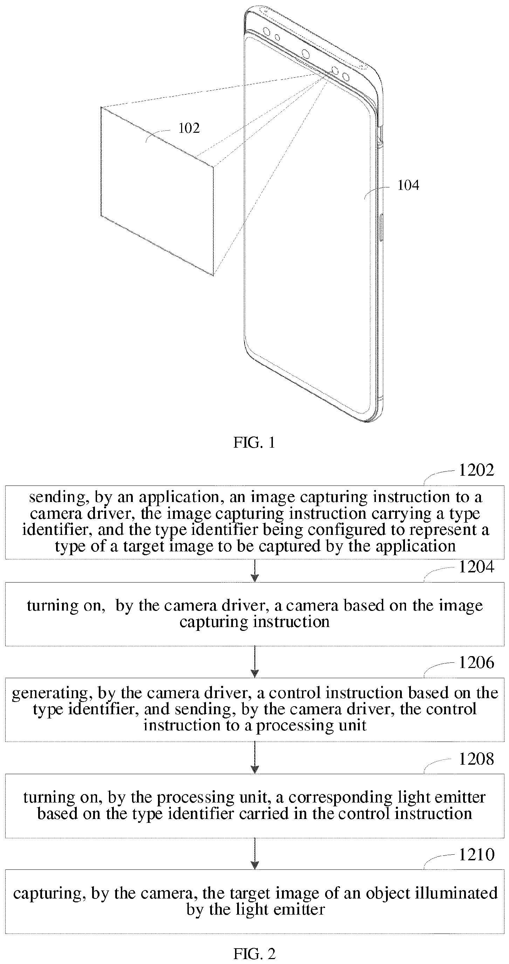

FIG. 1 is a schematic diagram illustrating an application scenario of a method for capturing an image according to an embodiment of the present disclosure. As illustrated in FIG. 1, the application scenario may include an electronic device 104. The electronic device 104 may be provided with a camera and a light emitter, and may be provided with various applications. In response to detecting that the application initiates an image capturing instruction, the application may send the image capturing instruction to a camera driver. The camera driver may turn on the camera based on the image capturing instruction. The camera driver may generate a control instruction based on a type identifier carried in the image capturing instruction and send the control instruction to a processing unit. The processing unit may turn on a corresponding light emitter based on the type identifier carried in the control instruction. A target image 102 of an object illuminated by the light emitter may be captured by the camera. The electronic device 104 may be a smart phone, a tablet computer, a personal digital assistance, a wearable device or the like.

FIG. 2 is a flow chart illustrating a method for capturing an image according to an embodiment of the present disclosure. As illustrated in FIG. 2, the method may include blocks 1202-1210.

At block 1202, an image capturing instruction may be sent by an application to a camera driver. The image capturing instruction may carry a type identifier. The type identifier may be configured to represent a type of a target image to be captured by the application.

Several applications may be provided on the electronic device. The application may refer to a software written for a certain application purpose. With the application, a service required by a user may be achieved. For example, the user may play games with a game-typed application, perform a payment transaction with a payment-typed application, and play music with a music-typed application.

In response to detecting that an image is required to be captured by the application, an image capturing instruction may be initiated, and the electronic device may obtain an image base on the image capturing instruction. The image capturing instruction may refer to an instruction for triggering an image capturing operation. For example, when the user desires to photograph an image and clicks a photographing button, in response to detecting by the electronic device that a photographing button of the electronic device is pressed down, the image capturing instruction may be generated to call the camera to capture an image. When the user requires to perform a payment by verifying face, the user may click a payment button and make the face to be focused by the camera. The electronic device may perform the verification of payment after a face image is captured.

In detail, the image capturing instruction initiated by the application may carry an initiation time point, a type identifier, an application identifier and the like. The initiation time point may refer to a time point of initiating by the application the image capturing instruction. The type identifier may represent a type of a target image to be captured by the application. The application identifier may be configured to indicate an application for initiating the image capturing instruction. In response to detecting by the electronic device that the application initiates the image capturing instruction, the image capturing instruction may be sent to the camera driver, and the camera driver may turn on or turn off the camera.

At block 1204, the camera is turned on by the camera driver based on the image capturing instruction.

It should be noted that, the camera may include a laser camera and a visible camera depending on images to be captured. The laser camera may be configured to obtain an image of the object illuminated by laser. The visible camera may be configured to obtain an image of the object illuminated by visible light. Several cameras may be provided on the electronic device and positions of the cameras are not limited.

For example, a camera may be provided on a front panel of the electronic device, while two cameras may be provided on a rear panel of the electronic device. The camera may also be embedded into the electronic device and may be turned on through a rotation or sliding manner. In detail, the electronic device may be provided with a front camera and a rear camera. The front camera and the rear camera may be configured to obtain images of different views. Generally, the front camera may be configured to obtain an image from a front view of the electronic device, while the rear camera may be configured to obtain an image from a rear view of the electronic device.

After the image capturing instruction is sent to the camera driver, the camera driver may turn on the camera based on the image capturing instruction. In detail, after the camera driver receives the image capturing instruction, a control signal may be inputted to the camera and the camera may be turned on with the input control signal. For example, a pulse wave signal may be inputted to the camera, and the camera may be turned on with the input pulse wave signal.

At block 1206, a control instruction is generated by the camera driver based on the type identifier and the control instruction is sent to a processing unit.

At block 1208, a corresponding light emitter is turned on by the processing unit based on the type identifier carried in the control instruction.

In embodiments of the present disclosure, while the electronic device turns the camera on to capture the image, the light emitter may be turned on simultaneously. The light emitter may emit light. In response to detecting that the light emitted by the light emitted reaches the object, the image of the object illuminated by the light may be captured by the camera. For example, the camera may be a laser camera. The light emitter may be a laser emitter. The laser emitter may generate laser and an infrared image of the object illuminated by the laser may be captured by the laser camera.

In detail, for different types of light emitters, the types of light emitted may be different. For example, the light emitter may include a flash light, a floodlight and a laser. The flash light may be configured to generate visible light, the floodlight may be configured to generate laser and the laser may be configured to generate laser speckles. The laser speckle may be generated by a diffraction effect of the laser though a diffraction element.

When the application generates the image capturing instruction, the type identifier may be written into the image capturing instruction. The type identifier may be configured to indicate the type of the captured image. When the types of images acquired are different, the turned on light emitters are also different. In detail, the processing unit may be connected to the light emitter. The camera driver may generate the control instruction based on the type identifier. After the control instruction is received by the processing unit, the processing unit may turn on the corresponding light emitter corresponding to the type identifier based on the control instruction. For example, in response to capturing a visible image, the flash light may be controlled to be turned on. In response to capturing an infrared image, the flood light may be controlled to be turned on.

At block 1210, a target image of an object illuminated by a light emitter is captured by the camera.

After the light emitter is turned on, light may be generated. The light may reach onto the object, the target image of the object illuminated by the light may be captured by the camera. After the target image is captured, the target image may be processed, and a manner of processing the target image is not limited. For example, the captured target image may be sent to the application, or processed by the processing unit of the electronic device, and a processed result may be returned to the application.

In an embodiment, in order to ensure an accuracy of the captured target image, the capturing time point when the target image is captured may be acquired in response to capturing the target image. The capturing time point may be compared with the initiation time point when the image capturing instruction is initiated. In response to detecting that a time interval from the capturing time point to the initiation time point is greater than an interval threshold, it may be determined that a delay is generated in a process of capturing the target image. That is, the captured target image is inaccurate, and the captured target image may be directly discarded. In response to detecting that the time interval from the capturing time point to the initiation time point is less than or equal to the interval threshold, it may be determined that the captured target image is accurate, and the captured target image may be processed.

With the method for capturing an image according to an embodiment of the present disclosure, after the image capturing instruction is initiated by the application, the image capturing instruction is sent to the camera driver, such that the camera driver may turn on the camera. The camera driver sends the control instruction to the processing unit. The processing unit controls to turn on the light emitter based on the control instructions. An image of an object illuminated by the light emitter may be captured by the turned-on camera. The image capturing instruction initiated by the application may be configured to turn on the camera by the camera driver. Different light emitters may be turned on by the processing unit, such that different types of target images may be captured, thereby meeting personalized needs of the user.

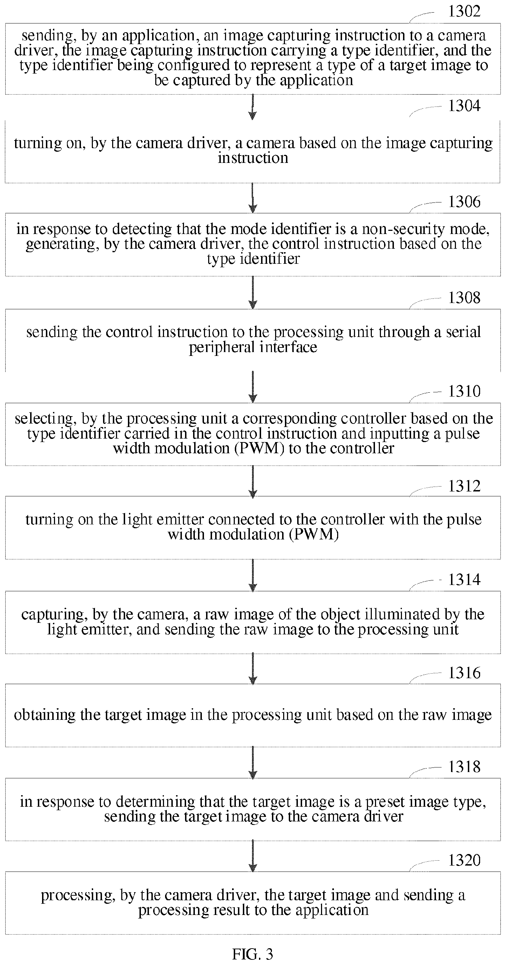

FIG. 3 is a flow chart illustrating a method for capturing according to another embodiment of the present disclosure. As shown in FIG. 3, the method may include blocks 1302 to 1320.

At block 1302, the application sends the image capturing instruction to the camera driver. The image capturing instruction may carry a type identifier and a mode identifier. The type identifier may be configured to indicate the type of the target image to be captured by the application.

It may be understood that the image capturing instruction initiated by the application may be automatically initiated by the electronic device in response to detecting that the condition is met, or may be manually initiated by the user. For example, the electronic device may automatically initiate the image capturing instruction in response to detecting a hand raising action of the user. In an example, a button clicking action of the user may trigger to generate the image capturing instruction. In response to generating the image capturing instruction, the type identifier and the mode identifier may be written in the image capturing instruction. The mode identifier may be configured to indicate a security level of the image capturing instruction.

In detail, the mode identifier may include a security mode and a non-security mode. An image captured in the security mode may have a higher security requirement on the execution environment, while an image captured in the non-secure mode may have a lower security requirement on the execution environment. After the application sends the image capturing instruction to the camera driver, the camera driver may switch among different data channels depending on the mode identifier. Securities of different data channels are different, such that the camera may be controlled through different data channels to capture images.

At block 1304, the camera driver turns on the camera based on the image capturing instruction.

At block 1306, in response to detecting that the mode identifier is a non-security mode, the camera driver generates the control instruction based on the type identifier.

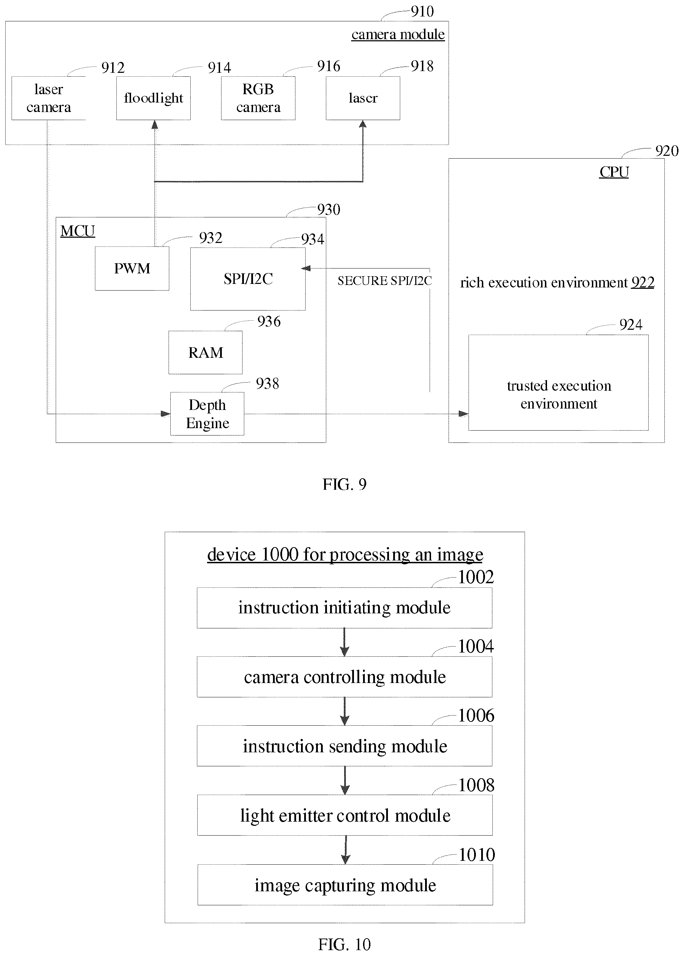

In embodiments according to the present application, the execution environment of the electronic device may include a security execution environment and a non-security execution environment. For example, as illustrated in FIG. 9, the non-security execution environment may be a REE (rich execution environment 922), and the security execution environment may be a TEE (trusted execution environment 924). The security of the REE may be lower than that of the TEE. The camera driver may be in the non-security execution environment, the processing unit may be connected to the light emitter, and a switch of the light emitter may be controlled by the processing unit.

The camera driver may send the control instruction to the processing unit. The processing unit may control to turn on the light emitter with the control instruction. In response to detecting that the mode identifier in the image capturing instruction indicates the non-security mode, the camera driver may directly send the control instruction to the processing unit. In response to detecting that the mode identifier in the image capturing instruction indicates the security mode, in order to prevent other malicious programs from operating on the light emitter, the camera driver may send the control instruction to a trusted application in the TEE. The control instruction may be sent to the processing unit by the trusted application.

The control instruction may be used to control the processing unit to turn on the light emitter. In detail, the type identifier may indicate the type of the image to be captured. A control instruction may be generated based on the type identifier. The corresponding light emitter may be turned on based on the type identifier carried in the control instruction. The target image corresponding to the type identifier may be captured.

At block 1308, the control instruction is sent to the processing unit through a serial peripheral interface.

In detail, after the camera driver generates the control instruction, the control instruction may be sent to the processing unit through a serial peripheral interface (SPI). The processing unit may receive the control instruction through the serial peripheral interface and a secure serial peripheral interface (Secure SPI). In response to detecting that the mode identifier in the image capturing instruction is the security mode, the electronic device may switch an interface of the processing unit to the secure serial peripheral interface and receive the control instruction sent by the trusted application through the secure serial peripheral interface. In response to detecting that the mode identifier in the image capturing instruction is the non-security mode, the interface of the processing unit may be switched to the serial peripheral interface and the control instruction sent by the camera driver may be received through the serial peripheral interface.

At block 1310, the processing unit selects a corresponding controller based on the type identifier carried in the control instruction and inputs a pulse width modulation (PWM) to the controller.

In an embodiment, the processing unit may be coupled to a controller. The controller may be coupled to the light emitter. In response to detecting that the processing unit receives the control instruction, the corresponding controller may be selected based on the type identifier in the control instruction and a pulse width modulation (PWM) may be input to the controller. The light emitter may be turned on with the inputted pulse width modulation PWM.

At block 1312, the light emitter connected to the controller is turned on with the pulse width modulation (PWM).

In an embodiment of the present application, the light emitter includes a first light emitter and/or a second light emitter. The turned-on light emitter is different in response to capturing a different type of target image. In detail, in response to detecting that the type identifier carried in the control instruction is the first type identifier, the processing unit may turn on the first light emitter. In response to detecting that the type identifier carried in the control instruction is the second type identifier or the third type identifier, the processing unit may control to turn on the second light emitter.

The camera may be a laser camera, the first light emitter may be a floodlight, and the second light emitter may be a laser. In detail, in response to detecting that the type identifier carried in the control instruction is the first type identifier, the processing unit may control to turn on the floodlight. In response to detecting that the type identifier carried in the control instruction is the second type identifier or the third type identifier, the processing unit may control to turn on the laser.

For example, the first type identifier may be an infrared image identifier and the floodlight may generate a laser, such that an infrared image of an object illuminated by the floodlight may be captured by the laser camera. The second type identifier may be a speckle image identifier and the laser may generate laser speckles, such that the speckle image generated by the laser speckle illumination may be acquired by the laser camera. The third identifier type may be a depth image identifier and a speckle image of an object illuminated by the laser speckle may be captured by the laser camera, such that a depth image may be obtained with a speckle image calculation.

In an embodiment, in response to detecting that the type identifier carried in the control instruction is the first type identifier, the processing unit may input a first pulse width modulation (PWM) to a first controller and turn on a first light emitter connected to the first controller with the first pulse width modulation (PWM). In response to detecting that the type identifier carried in the control instruction is the second type identifier or the third type identifier, the processing unit may input a second pulse width modulation (PWM) to a second controller and turn on a second light emitter connected to the second controller with the second pulse width modulation (PWM).

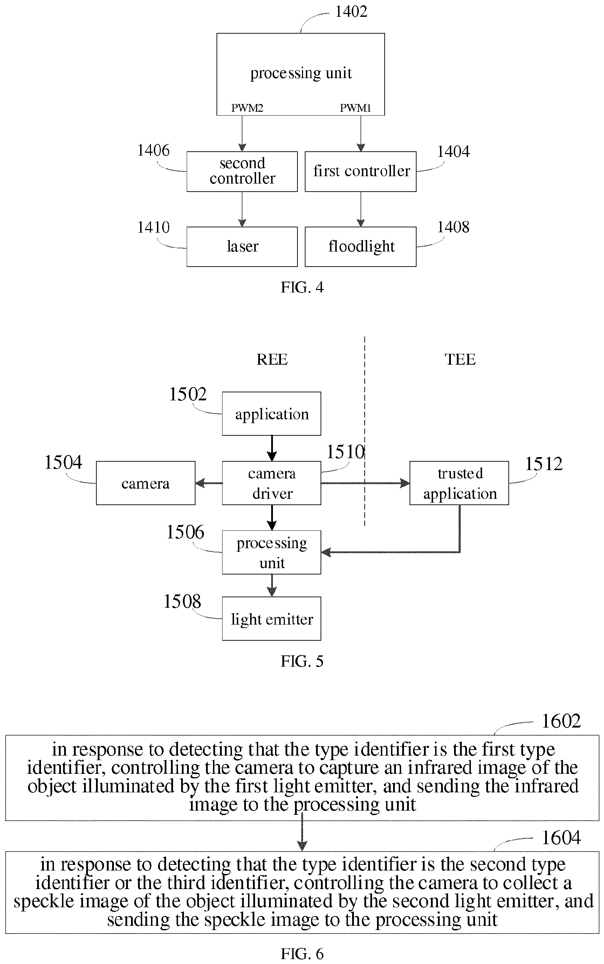

FIG. 4 is a schematic diagram of controlling a light emitter according to an embodiment of the present disclosure. As illustrated in FIG. 4, the first light emitter may be a floodlight 1408 and the second light emitter may be a laser 1410. The processing unit 1402 may input two pulse width modulations (PWMs), i.e. PWM1 and PWM2. In response to detecting that the processing unit 1402 outputs the PWM1, the first controller 1404 may be controlled by the PWM1 and the floodlight 1408 may be controlled to be turned on by the first controller 1404. In response to detecting that the processing unit 1402 outputs the PWM2, the second controller 1406 may be controlled by the PWM2 and the laser 1410 may be controlled to be turned on by the second controller 1406.

At block 1314, a raw image of an object illuminated by the light emitter is captured by the camera, and the raw image is sent to the processing unit.

In an embodiment, the camera does not directly capture the target image. The target image may be obtained after the captured image is processed. In detail, one raw image may be captured by the camera. The raw image may be sent to the processing unit, such that the target image may be generated by the processing unit based on the raw image. For example, in response to capturing images with dual cameras, in order to ensure consistency of images, it is necessary to align the images captured by the two cameras to ensure that the two images captured are from a same scene. Therefore, the image captured by the cameras need to be aligned and calibrated for normal processing.

At block 1316, the target image is obtained in the processing unit based on the raw image.

After the raw image is captured by the camera, the raw image may be returned to the processing unit. The processing unit may obtain the target image based on the raw image. For example, an infrared image captured by the camera may be aligned and calibrated and the calibrated infrared image may be determined as the target image. In an example, a depth image may be calculated based on a speckle image captured by the camera and the depth image may be determined as the target image.

FIG. 5 is a block diagram illustrating an electronic device for obtaining a target image according to the present invention.

As illustrated in FIG. 5, the execution environment of the electronic device may include a REE and a TEE. After the application 1502 in the REE initiates the image capturing instruction, the image capturing instruction may be sent to the camera driver 1510. The camera driver 1510 may turn on the camera 1504 and generate the control instruction based on the type identifier in the image capturing instruction. In response to determining by the camera driver 1510 that the mode identifier in the image capturing instruction is the non-security mode, the control instruction may be directly sent to the processing unit 1506. The light emitter 1508 may be controlled to be turned on by the processing unit 1506. The target image may be captured by the camera 1504 after the light emitter 1508 is turned on. In response to determining by the camera driver 1510 that the mode identifier in the image capturing instruction is the security mode, the control instruction may be sent to a trusted application 1512 in the TEE. The control instruction may be sent to the processing unit 1506 via the trusted application 1512. The light emitter 1508 may be controlled to be turned on by the processing unit 1506. The target image may be captured by the camera 1504 after the light emitter 1508 is turned on.

At block 1318, in response to determining that the target image is a preset image type, the target image is sent to the camera driver.

After the processing unit obtains the target image, the target image may be sent to the camera driver. The target image may be processed in the camera driver. In an embodiment according to the present application, the processing unit may include a first processing unit and a second processing unit. The first processing unit may be an MCU (microcontroller unit), while the second processing unit may be a CPU (central processing unit). The first processing unit may be coupled to the light emitter. The light emitter may be controlled to be turned on or turned off by the first processing unit.

In detail, the above method of capturing an image may include the following. The application sends the image capturing instruction to the camera driver, and the image capturing instruction carries a type identifier. The camera driver controls the camera to be turned on based on the image capturing instruction. The camera driver generates a control instruction based on the type identifier and sends the control instruction to the first processing unit. The first processing unit turns on the corresponding light emitter based on the type identifier carried in the control instruction. The raw image of the object illuminated by the light emitter is captured by the camera.

After the camera captures the raw image, the raw image may be sent to the first processing unit, such that the first processing unit may obtain the target image based on the raw image. The first processing unit and the second processing unit may be connected to each other. In response to detecting that the mode identifier in the image capturing instruction is the non-security mode, the first processing unit may send the target image to the camera driver, such that the target image may be processed by the camera driver. In response to detecting that the mode identifier in the image capturing instruction is the security mode, the first processing unit may send the target image to the second processing unit, such that the target image may be processed by the second processing unit.

At block 1320, the target image is processed by the camera driver, and the processing result is sent to the application.

It may be understood that the images to be captured by the application may be of one or more types. For example, an infrared image and a depth image may be captured simultaneously, or only a visible light image may be captured. After the target image is captured, the camera driver may process the target image. For example, a face recognition may be performed based on the infrared image and the depth image. A face detection and a face authentication may be performed based on the infrared image. The detected face may be subjected to living body detection based on the depth image to detect whether the detected face is a living body face.

In an embodiment, in response to detecting that the mode identifier is the non-security mode, before the first processing unit sends the target image to the camera driver, it may be determined whether the type of the target image is a preset image type. In response to determining that the type of the target image is the preset image type, the target image may be sent to the camera driver, such that the target image may be processed by the camera driver, and a processing result may be sent to the application. For example, in response to detecting the target image is a speckle image, the first processing unit may not send the target image to the camera driver. In response to detecting that the target image is an infrared image, a depth image, or a visible image, the first processing unit may not send the target image to the camera driver.

The second processing unit may specifically be a CPU core in the TEE. In the security mode, the first processing unit may have an input controlled by the trusted application and may be a processing unit separated from the CPU. Therefore, both the first processing unit and the second processing unit may be viewed as in the security execution environment. In response to detecting that the mode identifier is the security mode, since the second processing unit is in the security execution environment, the first processing unit may transmit the target image to the second processing unit. After the target image is processed by the second processing unit, the processing result may be sent to the application.

The second processing unit may further send the target image to the application. Before the target image is sent to the application, the second processing unit may determine the type of the target image. In response to detecting that the type of the target image is the preset image type, the second processing unit may send the target image to the application.

Further, before the second processing unit sends the target image, the target image may be compressed. The compressed target image may be sent to the application. In detail, the second processing unit may obtain an application level of the application and may obtain a corresponding compression level based on the application level of the application. A compression operation corresponding to the compression level is performed on the target image. The target image after compression may be sent to the application. For example, the application may be identified as a system security application, a system non-security application, a third-party security application, and a third-party non-security application. The corresponding compression level may be from high to low.

In detail, as illustrated in FIG. 6, the block of capturing the raw image may include the following.

At block 1602, in response to detecting that the type identifier is the first type identifier, the camera is controlled to capture an infrared image of the object illuminated by the first light emitter. The infrared image is sent to the processing unit.

In response to detecting that the type identifier is the first type identifier, it may indicate that the image to be captured by the application is an infrared image. The processing unit may control to active the first light emitter, such that an infrared image of the object illuminated by the first light emitter may be captured by the camera. In detail, the first light emitter may be a floodlight. In response to detecting that the laser generated by the floodlight reaches onto the object, an infrared image may be formed.

At block 1604, in response to detecting that the type identifier is the second type identifier or the third type identifier, the camera is controlled to capture the speckle image of the object illuminated by the second light emitter. The speckle image may be sent to the processing unit.

In response to detecting that the type identifier is the second type identifier, the image to be captured by the application is the speckle image. In response to detecting that the type identifier is the third type identifier, the image to be captured by the application is a depth image. Since the depth image is calculated from the captured speckle image, in response to detecting that the type identifier is the second type identifier or the third type identifier, the processing unit may control to turn on the second light emitter. The speckle image of the object illuminated by the second light emitter may be captured by the camera. The first light emitter may be a laser, in response to detecting that the laser speckle generated by the laser light reaches onto the object, the speckle image may be formed.

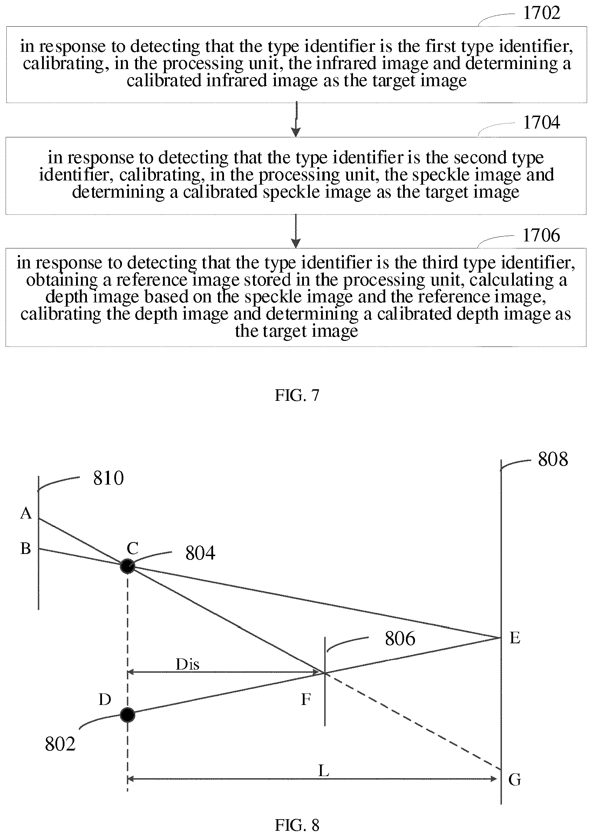

In an embodiment, the block of capturing the target image may specifically include the steps shown in Figure 7.

At block 1702, in response to detecting that the type identifier is the first type identifier, the infrared image is calibrated in the processing unit, and the calibrated infrared image may be determined as the target image.

The electronic device may be provided with multiple camera. Multiple cameras may be placed in different positions. Therefore, images captured by different cameras may form a certain parallax. After the infrared image is captured by the laser camera, in order to eliminate the influence of the parallax, the infrared image may be calibrated, such that that the images captured by different cameras correspond to a same field of view.

In detail, after the laser camera captures the infrared image, the infrared image may be sent to the processing unit. The processing unit may calibrate the captured infrared image based on a calibration algorithm. The calibrated infrared image may be determined as the target image.

At block 1704, in response to detecting that the type identifier is the second type identifier, the speckle image may be calibrated in the processing unit. The calibrated speckle image may be determined as the target image.

The electronic device may turn on the laser and the laser camera. The laser speckle formed by the laser may reach onto the object. The speckle image of the object illuminated by the laser speckle may be captured by the laser camera. In detail, in response detecting that the laser reaches onto an optically rough surface having an average fluctuation greater than the order of the wavelength, the sub-waves scattered by the surface elements distributed on the surfaces are superimposed on each other such that the reflected light field has a random spatial light intensity distribution, exhibiting a granular structure. This is the laser speckle. The formed laser speckle contains multiple laser speckle spots. Therefore, the speckle image captured by the laser camera may contains multiple speckle spots. For example, 30,000 speckle spots may be included in the speckle image.

The resulting laser speckle may be highly random. Therefore, the laser speckles generated with lasers emitted by different laser emitters may be different. When the formed laser speckle reaches onto objects of different depths and shapes, generated speckle images may be different. The laser speckle formed by a certain laser emitter is unique, such that the resulting speckle image is unique.

In response to detecting that the application captures a speckle image, after the laser camera captures the speckle image, the speckle image may be sent to the processing unit. The processing unit may calibrate the speckle image. The calibrated speckle image may be determined as the target image.

At block 1706, in response to detecting that the type identifier is a third type identifier, a reference image stored in the processing unit is obtained, a depth image is calculated based on the speckle image and the reference image, the depth image is calibrated, and the calibrated depth image is determined as the target image.

In response to detecting that the application captures a depth image, after the processing unit receives the speckle image captured by the laser camera, the processing unit may calculate the depth image based on the speckle image. It is also necessary to calibrate the parallax of the depth image. The calibrated depth image may be determined as the target image. In detail, a reference image may be stored in the processing unit. The reference image may be an image of a reference plane illuminated by the laser when the camera is calibrated. The reference image may carry reference depth information. The depth image may be obtained by through a calculation based on the reference image and the speckle image.

The block of calculating the depth image may specifically include the following. A reference image stored in the processing unit is obtained. The reference image is compared with the speckle image to obtain offset information. The offset information may be configured to represent a horizontal offset of a speckle spot in the speckle image relative to a corresponding speckle spot of the reference image. The depth image may be calculated based on the offset information and the reference depth information.

FIG. 8 is a schematic diagram of calculating depth information according to an embodiment of the present disclosure. As illustrated in FIG. 8, the laser 802 may generate laser speckles. After the laser speckle is reflected by the object, the image of the object may be acquired by the laser camera 804. During the calibration of the camera, the laser speckle emitted by the laser 802 may be reflected by the reference plane 808. The reflected light may be captured by the laser camera 804. The reference image may be obtained on the imaging plane 810. A distance from the reference plane 808 to the laser light 802 may be a reference depth of L. The reference depth may be known. In a process of actual calculation of the depth information, the laser speckle emitted by the laser 802 may be reflected by the object 806. The reflected light may be captured by the laser camera 804. The actual speckle image may be obtained on the imaging plane 810. The actual depth information may be calculated as:

$$Dis = \frac{CD \times L \times f}{L \times AB + CD \times f} \quad \text{formula (1)}$$

where, L denotes a distance between the laser 802 and the reference plane 808, f denotes a focal length of the lens in the laser camera 804, CD denotes a distance between the laser 802 and the laser camera 804, and AB denotes an offset distance between an image of the object and an image of the reference plane 808. The value of AB may be a product of a pixel offset n and an actual distance p of the pixel. In response to detecting that the distance Dis between the object 804 and the laser 802 is greater than the distance L between the reference plane 806 and the laser 802, the value of AB is negative. In response to detecting that the distance Dis between the object 804 and the laser 802 is less than the distance L between the reference plane 806 and the laser 802, the value of AB is positive.

With the method of processing an image according to embodiments of the present disclosure, the image capturing instruction may be sent to the camera driver after the application initiates the image capturing instruction. The camera is turned on by the camera driver. The camera driver sends the control command to the processing unit. The processing unit controls to turn on the light emitter based on the control instruction. An image of the object illuminated by the light emitter may be captured by the turned-on camera. The image capturing instruction initiated by the application may turn on the camera by the camera driver. Different light emitters may be turned on by the processing unit, thereby capturing different types of target images to meet personalized needs of the user.

It should be understood, although blocks of the flowcharts illustrated in FIGS. 2, 3, 6, and 7 are sequentially displayed based on indications of arrows, these blocks are not necessarily performed in the order indicated by the arrows. Otherwise explicitly stated herein, the execution of these blocks is not strictly limited, and the blocks may be performed in other orders. Moreover, at least some of the blocks in FIGS. 2, 3, 6 and 7 may include multiple sub-steps or stages, which are not necessarily performed simultaneously, but may be at different times. The order of execution of these sub-steps or stages is not necessarily performed sequentially, but may be performed in turn or alternately with at least a portion of other steps or sub-steps or stages of other steps.

FIG. 9 is a schematic diagram illustrating hardware for implementing a method for capturing an image according to an embodiment of the present disclosure. As illustrated in FIG. 9, the electronic device may include a camera module 910, a central processing unit (CPU) 920, and a microcontroller unit (MCU) 930. The camera module 910 may include a laser camera 912, a floodlight 914, a RGB (Red/Green/Blue, red/green/blue color mode) camera 916 and a laser 918. The microcontroller unit 930 may include a PWM module 932, a SPI/I2C (serial peripheral interface/inter-integrated circuit) module 934, a RAM (random access memory) module 936, and a depth engine module 938. The first processing unit may be the microcontroller unit 930, and the second processing unit may be the CPU core in the TEE 924. It may be understood that the central processing unit 920 may be in a multi-core operating mode, and the CPU core in the central processing unit 920 may operate in the TEE 924 or REE 922. Both the TEE 924 and REE 922 are operating modes of the ARM (advanced reduced instruction set processor machines) module. In general, an operation of a high-security of the electronic devices needs to be performed in the TEE 924, and other operations may be performed in the REE 922.

FIG. 10 is a block diagram illustrating a device for capturing an image according to an embodiment of the present disclosure. As illustrated in FIG. 10, the device 1000 for processing an image may include an instruction initiating module 1002, a camera control module 1004, an instruction sending module 1006, a light emitter control module 1008, and an image capturing module 1010.

The instruction initiating module 1002 may be configured to send an image capturing instruction to the camera driver through an application. The image capturing instruction may carry a type identifier, the type identifier may be configured to indicate a type of the target image to be captured by the application.

The camera control module 1004 may be configured to turn on the camera by the camera driver based on the image capturing instruction.

The instruction sending module 1006 may be configured to generate by the camera driver a control instruction based on the type identifier and send the control instruction to the processing unit.

The light emitter control module 1008 may be configured to turn on by the processing unit, a corresponding light emitter based on the type identifier carried in the control instruction.

The image capturing module 1010 may be configured to capture by the camera a target image of an object illuminated by the light emitter.

With the device for capturing an image according to embodiments of the present disclosure, an image capturing instruction may be sent to the camera driver after the application initiates the image capturing instruction. The camera may be turned on by the camera driver. The camera driver may send the control instruction to the processing unit. The processing unit may control to turn on the light emitter based on the control instruction. An image of the object illuminated by the light emitter may be captured by the turned-on camera. The image capturing instruction initiated by the application may be configured to turn on the camera by the camera driver. Different light emitters may be turned on by the processing unit, thereby capturing different types of target images to meet personalized needs of the user.

In an embodiment, the image capturing instruction may carry a mode identifier. The instruction sending module 1006 may be further configured to, in response to detecting that the mode identifier is the non-security mode, generate a control instruction based on the type identifier by the camera driver; The control instruction may be sent to the processing unit through serial peripheral interface.

In an embodiment, the light emitter may include a first light emitter and/or a second light emitter. The light emitter control module 1008 may be further configured to, in response to detecting that the type identifier carried in the control instruction is a first type identifier, control by the processing unit to turn on the first light emitter, and in response to detecting that the type identifier carried in the control instruction is a second type identifier or a third type identifier, control by the processing unit to turn on the second light emitter.

In an embodiment, the light emitter control module 1008 may be further configured to select a corresponding controller based on the type identifier carried in the control instruction by the processing unit, and input a pulse width modulation (PWM) to the controller. The pulse width modulation (PWM) may be configured to turn on the light emitter connected to the controller.

In an embodiment, the image capturing module 1010 may be further configured to capture by the camera a raw image of an object illuminated by the light emitter and send the raw image to the processing unit, and obtain a target image in the processing unit based on the raw image.

In an embodiment, the image capturing module 1010 may be further configured to, in response to detecting that the type identifier is a first type identifier, control the camera to capture an infrared image of the object illuminated by the first light emitter and send the infrared image to the processing unit; in response to detecting that the type identifier is a second type identifier or a third type identifier, control the camera to capture a speckle image of an object illuminated by the second light emitter and send the speckle image to the processing image.

In an embodiment, the image capturing module 1010 may be further configured to, in response to detecting that the type identifier is a first type identifier, calibrate the infrared image in the processing unit and determine the calibrated infrared image as the target image; in response to detecting that the type identifier is a second type identifier, calibrate the speckle image in the processing unit and determine the calibrated speckle image as the target image; in response to detecting that the type identifier is a third type identifier, obtain a reference image stored in the processing unit and calculate a depth image based on the speckle image and the reference image, calibrate the depth image and determine the calibrated depth image as the target image.

In an embodiment, the device 1000 for capturing an image may further include an image processing module. The image processing module may be configured to, in response to detecting that the target image is a preset image type, send the target image to the camera driver; process the target image by the camera driver and send the processing result to the application.

The division of each module in the above device for capturing an image is for illustrative purposes only. In another embodiment, the device for processing an image may be divided into different modules as needed to implement all or part of functions of the device for capturing an image.

Second Implementation

FIG. 1 is a schematic diagram illustrating an application scenario of a method for capturing an image according to an embodiment of the present disclosure. As illustrated in FIG. 1, the application scenario may include an electronic device 104. The electronic device 104 may be provided with a camera and a light emitter, and may be provided with various applications. In response to detecting that an application initiates an image capturing instruction, the application may send the image capturing instruction to a camera driver. The camera driver may turn on the camera based on the image capturing instruction. The camera driver may generate a control instruction based on a type identifier carried in the image capturing instruction and send the control instruction to a trusted application in a security execution environment. The control instruction may be sent by the trusted application to the processing unit. A corresponding light emitter may be turned on by the first processing unit based on the type identifier carried in the control instruction. A target image 102 of an object illuminated by the light emitter may be captured by the camera. The electronic device 104 may be a smart phone, a tablet computer, a personal digital assistance, a wearable device or the like.

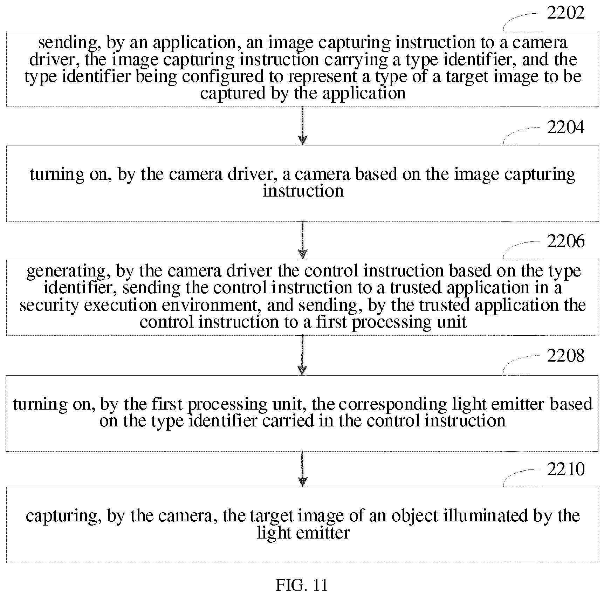

FIG. 11 is a flowchart illustrating a method for capturing an image according to an embodiment of the present disclosure. As illustrated in FIG. 11, the method for capturing an image may include blocks 2202 to 2210 (the block 1206 may include the block 2206 and the block 1208 may include the block 2208).

At block 2202, the application sends the image capturing instruction to the camera driver. The image capturing instruction may carry a type identifier, and the type identifier may be configured to indicate the type of the target image to be captured by the application.

There may be several applications installed on an electronic device. The application may refer to a software written for an application purpose in the electronic device. With the application, a service required by a user may be achieved. For example, the user may play games with a game-typed application, perform a payment transaction with a payment-typed application, and play music with a music-typed application.

In response to detecting that an image is required to be captured by the application, an image capturing instruction may be initiated, and the electronic device may obtain an image base on the image capturing instruction. The image capturing instruction may refer to an instruction for triggering an image capturing operation. For example, when the user desires to photograph an image and clicks a photographing button, in response to detecting by the electronic device that a photographing button of the electronic device is pressed down, the image capturing instruction may be generated to call the camera to capture an image. When the user requires to perform a payment by verifying face, the user may click a payment button and make the face to be focused by the camera. The electronic device may perform the verification of payment after a face image is captured.

In detail, the image capturing instruction initiated by the application may carry an initiation time point, a type identifier, an application identifier and the like. The initiation time point may refer to a time point of initiating by the application the image capturing instruction. The type identifier may represent a type of a target image to be captured by the application. The application identifier may be configured to indicate an application for initiating the image capturing instruction. In response to detecting by the electronic device that the application initiates the image capturing instruction, the image capturing instruction may be sent to the camera driver, and the camera driver may turn on or turn off the camera.

At block 2204, the camera driver turns on the camera based on the image capturing instruction.

It should be noted that, the camera may include a laser camera, a visible camera, and the like based on the captured image. The laser camera may capture an image of the object illuminated by the laser. The visible camera may obtain an image of the object illuminated by the visible light. Several cameras may be provided on the electronic device and positions of the cameras are not limited.

For example, a camera may be provided on a front panel of the electronic device, while two cameras may be provided on a rear panel of the electronic device. The camera may also be embedded into the electronic device and may be turned on through a rotation or sliding manner. In detail, the electronic device may be provided with a front camera and a rear camera. The front camera and the rear camera may be configured to obtain images of different views. Generally, the front camera may be configured to obtain an image from a front view of the electronic device, while the rear camera may be configured to obtain an image from a rear view of the electronic device.

After the image capturing instruction is sent to the camera driver, the camera driver may turn on the camera based on the image capturing instruction. In detail, after the camera driver receives the image capturing instruction, a control signal may be inputted to the camera and the camera may be turned on with the input control signal. For example, a pulse wave signal may be inputted to the camera, and the camera may be turned on with the input pulse wave signal.

At block 2206, the camera driver generates a control instruction based on the type identifier, and sends the control instruction to the trusted application in the security execution environment, and sends the control instruction to the first processing unit through the trusted application.

At block 2208, the first processing unit turns on the corresponding light emitter based on the type identifier carried in the control instruction.

In embodiments according to the present application, the electronic device may simultaneously turn on the light emitter while capturing the image by turning on the camera. The light emitter may emit light, in response to detecting that the light from the light emitter reaches onto the object, the image of the object illuminated by the light may be captured by the camera. For example, the camera may be a laser camera. The light emitter may be a laser emitter. The laser emitter may generate laser. The infrared image of the object illuminated by the laser may be captured by the laser camera.

In detail, for different types of light emitters, the types of light emitted may be different. For example, the light emitter may include a flash light, a floodlight and a laser. The flash light may be configured to generate visible light, the floodlight may be configured to generate laser and the laser may be configured to generate laser speckles. The laser speckle may be generated by a diffraction effect of the laser though a diffraction element.

When the application generates the image capturing instruction, the type identifier may be written into the image capturing instruction. The type identifier may be configured to indicate the type of the captured image. When the types of images acquired are different, the turned-on light emitters are also different. The first processing unit is connected to the light emitter and the light emitter may be controlled to be turned on and turned off by the first processing unit. In detail, the first processing unit may be in the security execution environment, such that the light emitter may be controlled to be turned on and turned off by the first processing unit, to ensuring the security of capturing the image.

It should be noted that, in order to ensure the security of inputted control instruction, the control instruction generated by the camera driver may be sent to the first processing unit by a trusted application (TA) in the security execution environment. The first processing unit may control to turn on and turn off the light emitter based on the control instruction. In detail, the trusted application may be an application in a CPU (central processing unit) core in a TEE (trusted execution environment) and send a control instruction to the first processing unit through the trusted application, to ensure security.

After the first processing unit receives the control instruction, the first processing unit may turn on the corresponding light emitter corresponding to the type identifier based on the control instruction. For example, in response to capturing a visible image, the flash light may be turned on, in response to capturing the infrared image, the floodlight may be turned on.

At block 2210, a target image of the object illuminated by the light emitter is captured by the camera.

After the light emitter is turned on, light may be generated. The light may reach onto the object, the target image of the object illuminated by the light may be captured by the camera. After the target image is captured, the target image may be processed, and a manner of processing the target image is not limited. For example, the captured target image may be sent to the application, or processed by the processing unit of the electronic device, and a processed result may be returned to the application.

In an embodiment, in order to ensure an accuracy of the captured target image, the capturing time point when the target image is captured may be acquired in response to capturing the target image. The capturing time point may be compared with the initiation time point when the image capturing instruction is initiated. In response to detecting that a time interval from the capturing time point to the initiation time point is greater than an interval threshold, it may be determined that a delay is generated in a process of capturing the target image. That is, the captured target image is inaccurate, and the captured target image may be directly discarded. In response to detecting that the time interval from the capturing time point to the initiation time point is less than or equal to the interval threshold, it may be determined that the captured target image is accurate, and the captured target image may be processed.

With the method for processing an image according to an embodiment of the present disclosure, after the image capturing instruction is initiated by the application, the camera may be turned on by the camera driver. The control instruction for turning on the light emitter may be sent by the trusted application in the security execution environment, such that the image of the object illuminated by the light emitter may be captured by the camera. During capturing the image, the control instruction for turning on the light emitter may be sent by the trusted application in the security execution environment, to prevent other malicious programs from operating on the light emitter, to improve the security of the process of capturing the image.

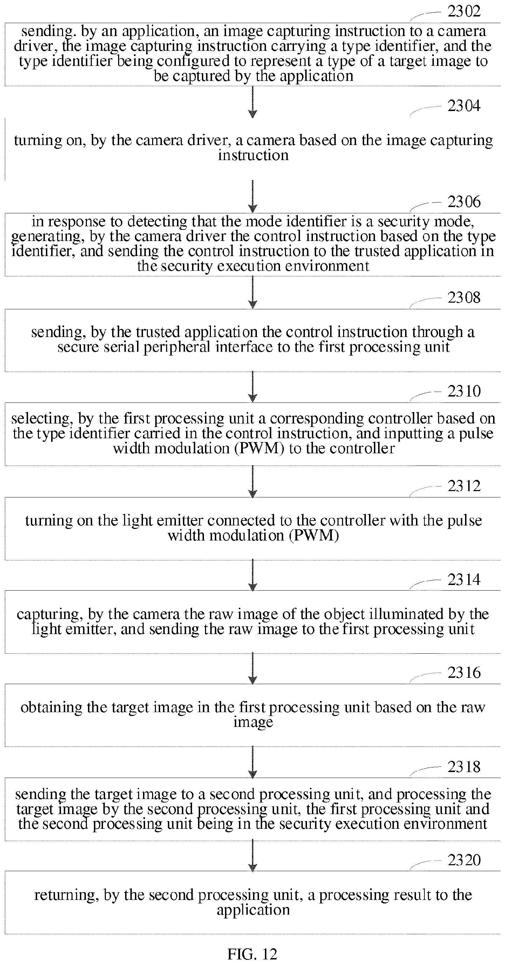

FIG. 12 is a flowchart illustrating a method for capturing an image according to another embodiment of the present disclosure. As illustrated in FIG. 12, the method for capturing an image may include blocks 2302 to 2320.

At block 2302, the application sends the image capturing instruction to the camera driver. The image capturing instruction may carry a type identifier and a mode identifier. The type identifier may be configured to indicate the type of the target image to be captured by the application.

It may be understood that the image capturing instruction initiated by the application may be automatically initiated by the electronic device in response to detecting that the condition is met, or may be manually initiated by the user. For example, the electronic device may automatically initiate the image capturing instruction in response to detecting a hand raising action of the user. In an example, a button clicking action of the user may trigger to generate the image capturing instruction. In response to generating the image capturing instruction, the type identifier and the mode identifier may be written in the image capturing instruction. The mode identifier may be configured to indicate a security level of the image capturing instruction.

In detail, the mode identifier may include a security mode and a non-security mode. An image captured in the security mode may have a higher security requirement on the execution environment, while an image captured in the non-secure mode may have a lower security requirement on the execution environment. After the application sends the image capturing instruction to the camera driver, the camera driver may switch among different data channels depending on the mode identifier. Securities of different data channels are different, such that the camera may be controlled through different data channels to capture images.

At block 2304, the camera driver turns on the camera based on the image capturing instruction.

At block 2306, in response to detecting that the mode identifier is the security mode, the camera driver generates a control instruction based on the type identifier and sends the control instruction to the trusted application in the security execution environment.

In embodiments according to the present application, the execution environment of the electronic device may include a security execution environment and a non-security execution environment. The camera driver may be in the non-security execution environment. The trusted application may be in the security execution environment. The control instruction may be sent by the trusted application in the security execution environment to ensure the security of the control. For example, the non-security execution environment may be a REE (rich execution environment), while the security execution environment may be a TEE. The security of the REE may be lower than the security of the TEE.

The camera driver may send a control instruction to the first processing unit. The first processing unit may control to turn on the light emitter with the control instruction. In response to detecting that the mode identifier in the image capturing instruction is the security mode, to prevent other malicious programs from operating on the light emitter, the camera driver may send the control instruction to the trusted application in the security execution environment and send the control instruction by the trusted application to the first processing unit. In response to detecting the mode identifier in the image capturing instruction is the non-security mode, the camera driver may directly send the control instruction to the first processing unit.

The control instruction may be configured to control the first processing unit to turn on the light emitter. In detail, the type identifier may indicate the type of the image to be captured. The control instruction may be generated based on the type identifier. The corresponding light emitter may be turned on based on the type identifier carried in the control instruction. The target image may be captured based on the type identifier. For example, in response to detecting that the type identifier is an infrared image identifier, the floodlight may be turned on. The infrared image of the object illuminated by the floodlight may be captured.

At block 2308, the trusted application sends the control instruction to the first processing unit through the secure serial peripheral interface.

In detail, the first processing unit may receive a control instruction through a serial peripheral interface (SPI) and a secure serial peripheral interface (secure SPI). In response to detecting the mode identifier in the image capturing instruction is the security mode, the electronic device switches an interface of the first processing unit to the secure serial peripheral interface. The control instruction sent by the trusted application may be received through the secure serial peripheral interface. In response to detecting that the mode identifier in the image capturing instruction is the non-security mode, the interface of the first processing unit may be switched to the serial peripheral interface. The control instruction sent by the camera driver may be received through the serial peripheral interface.

At block 2310, the first processing unit selects a corresponding controller based on the type identifier carried in the control instruction and inputs a pulse width modulation (PWM) to the controller.

In an embodiment, the first processing unit may be connected to a controller. The controller may be coupled to the light emitter. In response to detecting that the first processing unit receives the control instruction, the corresponding controller may be selected based on the type identifier in the control instruction. A pulse width modulation (PWM) may be input to the controller. The light emitter may be turned on with the inputted pulse width modulation (PWM).

At block 2312, the light emitter connected to the controller may be turned on with the pulse width modulation (PWM).

In an embodiment of the present application, the light emitter may include a first light emitter and/or a second light emitter. Different light emitters may be turned on in response to capturing different types of target images. In detail, in response to detecting that the type identifier carried in the control instruction is the first type identifier, the first processing unit may control to turn on the first light emitter. In response to detecting that the type identifier carried in the control instruction is the second type identifier or the third type identifier, the first processing unit may control to turn on the second light emitter.

The camera may be a laser camera. The first light emitter may be a floodlight. The second light emitter may be a laser. In detail, in response to detecting that the type identifier carried in the control instruction is the first type identifier, the first processing unit may control to turn on the floodlight. In response to detecting that the type identifier carried in the control instruction is the second type identifier or the third type identifier, the first processing unit may control to turn on the laser.

For example, the first type identifier may be an infrared image identifier. The floodlight may generate laser. The infrared image of the object illuminated by the floodlight may be captured by the laser camera. The second type identifier may be a speckle image identifier. The laser may generate laser speckles. The speckle image of the object illuminated by the laser speckle may be captured by the laser camera. The third type identifier may be a depth image identifier. The speckle image of the object illuminated by the laser speckle may be captured by the laser camera, and the depth image may be obtained based on the speckle image calculation.

In an embodiment, in response to detecting that the type identifier carried in the control instruction is the first type identifier, the first processing unit may input a first pulse width modulation (PWM) to the first controller. The first light emitter connected to the first controller may be turned on with the first pulse width modulation (PWM). In response to detecting that the type identifier carried in the control instruction is a second type identifier or a third type identifier, the first processing unit may input a second pulse width modulation (PWM) to the second controller. The second light emitter connected to the second controller may be turned on with the second pulse width modulation (PWM).

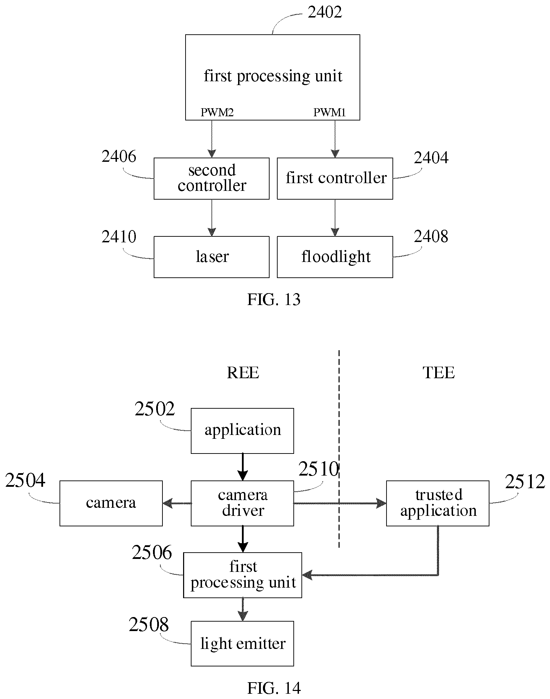

FIG. 13 is a block diagram of controlling a light emitter according to an embodiment of the present disclosure. As illustrated in FIG. 13, the first light emitter may be a floodlight 2408 and the second light emitter may be a laser 2410. The first processing unit 2402 may input two pulse width modulations (PWM), i.e. PWM1 and PWM2. In response to outputting by the first processing unit 2402 the PWM1, the first controller 2404 may be controlled by the PWM1 and the floodlight 2408 may be controlled to be turned on by the first controller 2404. In response to outputting by the first processing unit 2402 the PWM2, the second controller 2406 may be controlled by the PWM 2, and the laser 2410 may be controlled to be turned on by the second controller 2406.

At block 2314, a raw image of the object illuminated by the light emitter is captured by the camera, and the raw image is sent to the first processing unit.

In an embodiment, the camera does not directly capture the target image, but the target image is obtained after some processing of the captured image. In detail, a raw image may be captured by the camera. The raw image may be sent to the first processing unit. The first processing unit may generate the target image based on the raw image. For example, in response to capturing images with dual cameras, in order to ensure consistency of images, it is necessary to align the images captured by the two cameras to ensure that the two images captured are from a same scene. Therefore, the image captured by the cameras need to be aligned and calibrated for normal processing.

At block 2316, the target image is obtained in the first processing unit based on the raw image.

After the raw image is captured by the camera, the raw image may be returned to the first processing unit. The first processing unit may obtain the target image based on the raw image. For example, an infrared image captured by the camera may be aligned and calibrated and the calibrated infrared image may be determined as the target image. In an example, a depth image may be calculated based on a speckle image captured by the camera and the depth image may be determined as the target image.

FIG. 14 is a block diagram illustrating an electronic device for obtaining a target image according to an embodiment of the present disclosure. As illustrated in FIG. 14, the execution environment of the electronic device may include a REE and a TEE. After the application 2502 in the REE initiates the image capturing instruction, the image capturing instruction may be sent to the camera driver 2510. The camera driver 2510 may turn on the camera 2504 and generate the control instruction based on the type identifier in the image capturing instruction. In response to determining by the camera driver 2510 that the mode identifier in the image capturing instruction is the non-security mode, the control instruction may be directly sent to the first processing unit 2506. The light emitter 2508 may be controlled to be turned on by the first processing unit 2506. The target image may be captured by the camera 2504 after the light emitter 2508 is turned on. In response to determining by the camera driver 2510 that the mode identifier in the image capturing instruction is the security mode, the control instruction may be sent to a trusted application 2512 in the TEE. The control instruction may be sent to the processing unit 2506 via the trusted application 2512. The light emitter 2508 may be controlled to be turned on by the first processing unit 2506. The target image may be captured by the camera 2504 after the light emitter 2508 is turned on.

At block 2318, the target image is sent to the second processing unit, and the target image is processed by the second processing unit. The first processing unit and the second processing unit are both in a security execution environment.

In another embodiment according to the present application, the electronic device may further include a second processing unit. The first processing unit and the second processing unit may be connected to each other. The first processing unit may be an MCU (microcontroller unit), and the second processing unit may be a CPU (central processing unit). The first processing unit may be coupled to the light emitter, and the light emitter may be controlled to be turned on or turned off by the first processing unit.

In response to detecting that the mode identifier in the image capturing instruction is the security mode, the first processing unit may send the target image to the second processing unit, such that the target image may be processed by the second processing unit. In response to detecting that the mode identifier in the image capturing instruction is the non-security mode, the first processing unit may send the target image to the camera driver, such that the target image may be processed by the camera driver.

It may be understood that the image captured by the application may be of one or more types. For example, an infrared image and a depth image may be captured simultaneously, In an example, only a visible image may be captured. After the target image is captured, the target image may be processed. For example, face recognition may be performed based on the infrared image and the depth image, face detection and face verification may be performed based on the infrared image, and the detected face may be subjected to living body detection based on the depth image to detect whether the detected face is a living human face.

In response to obtaining the target image based on the raw image, the first processing unit may obtain the time point when the target image is generated as the capturing time point. The capturing time point may be compared with the initiation time point. In response to detecting that the time interval between the capturing time point and the initiation time point is less than the interval threshold, the target image may be sent to the second processing unit. In response to detecting that the time interval between the capturing time point and the initiation time point is less than the interval threshold, it may be determined that a delay is generated in a process of capturing the target image. That is, the captured target image is inaccurate, and the captured target image may be directly discarded.

At block 2320, the second processing unit sends a processing result to the application.

In an embodiment, the second processing unit may specifically be a CPU core in the TEE, while the first processing unit may be a processing unit separated from the CPU. In the security mode, the input of the first processing unit may be controlled by the trusted application in the security execution environment. Therefore, both the first processing unit and the second processing unit are in a security execution environment. In response to detecting that the mode identifier is the security mode, since the second processing unit is in the security execution environment, the first processing unit may send the target image to the second processing unit. After the second processing unit processes the target image, the processing result may be sent to the application.

The second processing unit may further send the target image to the application. Before the target image is sent to the application, the second processing unit may determine the type of the target image. In response to detecting that the type of the target image is a preset image type, the second processing unit may send the target image to the application. For example, in response to detecting that the target image is a speckle image, the second processing unit does not send the target image to the application. In response to detecting that the target image is an infrared image, a depth image, or a visible image, the second processing unit may send the target image to the application.

Further, before the second processing unit sends the target image, the target image may be compressed. The compressed target image may be sent to the application. In detail, the second processing unit may obtain an application level of the application and obtain a corresponding compression level based on the application level of the application. The second processing unit may perform a compression operation corresponding to the compression level on the target image and send the target image compressed to the application. For example, the application may be identified as a system security application, a system non-security application, a third-party security application, and a third-party non-security application. The corresponding compression level may be from high to low.

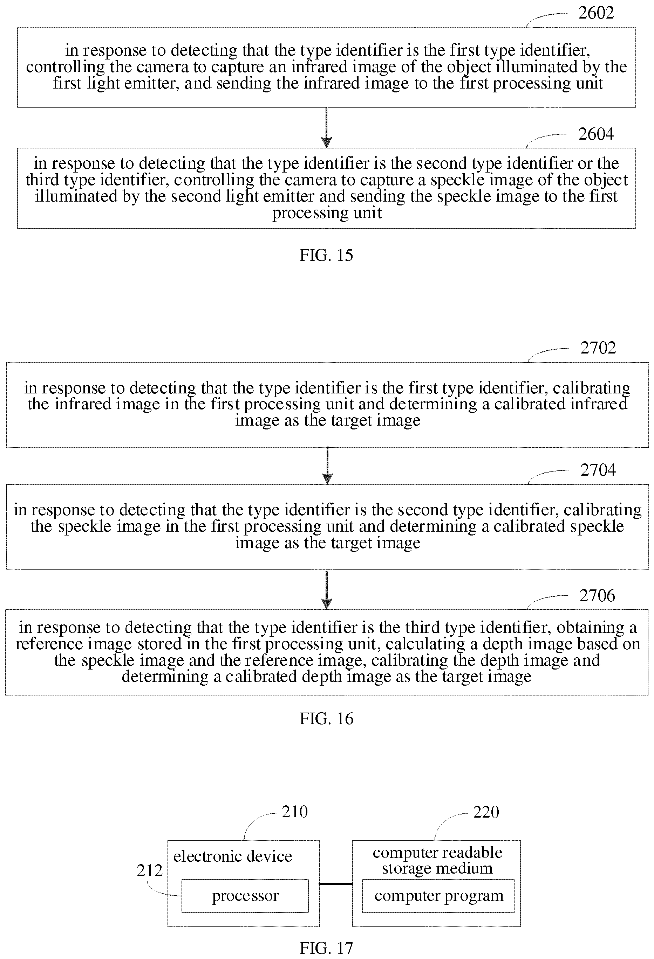

In detail, as illustrated in FIG. 15, the block of capturing the raw image may include the following.

At block 2602, in response to detecting that the type identifier is the first type identifier, the camera is controlled to capture an infrared image of the object illuminated by the first light emitter. The infrared image is sent to the first processing unit.

In response to detecting that the type identifier is the first type identifier, it may indicate that the image to be captured by the application is an infrared image. The first processing unit may control to active the first light emitter, such that an infrared image of the object illuminated by the first light emitter may be captured by the camera. In detail, the first light emitter may be a floodlight. In response to detecting that the laser generated by the floodlight reaches onto the object, an infrared image may be formed.

At block 2604, in response to detecting that the type identifier is the second type identifier or the third type identifier, the camera is controlled to capture the speckle image of the object illuminated by the second light emitter. The speckle image may be sent to the first processing unit.

In response to detecting that the type identifier is the second type identifier, it may be indicated that the image to be captured by the application is the speckle image. In response to detecting that the type identifier is the third type identifier, it may be indicated that the image to be captured by the application is a depth image. Since the depth image is calculated from the captured speckle image, in response to detecting that the type identifier is the second type identifier or the third type identifier, the first processing unit may control to turn on the second light emitter. The speckle image of the object illuminated by the second light emitter may be captured by the camera. The first light emitter may be a laser. In response to detecting that the laser speckle generated by the laser light reaches onto the object, the speckle image may be formed.

In an embodiment, the block of capturing the target image may specifically include the following.

At block 2702, in response to detecting that the type identifier is the first type identifier, the infrared image is calibrated in the first processing unit, and the calibrated infrared image is determined as the target image.

The electronic device may be provided with multiple camera. Multiple cameras may be placed in different positions. Therefore, images captured by different cameras may form a certain parallax. After the infrared image is captured by the laser camera, in order to eliminate the influence of the parallax, the infrared image may be calibrated, such that that the images captured by different cameras correspond to a same field of view.

In detail, after the laser camera captures the infrared image, the infrared image may be sent to the first processing unit. The first processing unit may calibrate the captured infrared image based on a calibration algorithm. The calibrated infrared image may be determined as the target image.

At block 2704, in response to detecting that the type identifier is the second type identifier, the speckle image may be calibrated in the first processing unit. The calibrated speckle image may be determined as the target image.

The electronic device may turn on the laser and the laser camera. The laser speckle formed by the laser may reach onto the object. The speckle image of the object illuminated by the laser speckle may be captured by the laser camera. In detail, in response detecting that the laser reaches onto an optically rough surface having an average fluctuation greater than the order of the wavelength, the sub-waves scattered by the surface elements distributed on the surfaces are superimposed on each other such that the reflected light field has a random spatial light intensity distribution, exhibiting a granular structure. This is the laser speckle. The formed laser speckle contains multiple laser speckle spots. Therefore, the speckle image captured by the laser camera may contains multiple speckle spots. For example, 30,000 speckle spots may be included in the speckle image.

The resulting laser speckle may be highly random. Therefore, the laser speckles generated with lasers emitted by different laser emitters may be different. When the formed laser speckle reaches onto objects of different depths and shapes, generated speckle images may be different. The laser speckle formed by a certain laser emitter is unique, such that the resulting speckle image is unique.

In response to detecting that the application captures a speckle image, after the laser camera captures the speckle image, the speckle image may be sent to the first processing unit. The first processing unit may calibrate the speckle image. The calibrated speckle image may be determined as the target image.

At block 2706, in response to detecting that the type identifier is a third type identifier, a reference image stored in the first processing unit is obtained, a depth image is calculated based on the speckle image and the reference image, the depth image is calibrated, and the calibrated depth image is determined as the target image.

In response to detecting that the application captures a depth image, after the first processing unit receives the speckle image captured by the laser camera, the first processing unit may calculate the depth image based on the speckle image. It is also necessary to calibrate the parallax of the depth image. The calibrated depth image may be determined as the target image. In detail, a reference image may be stored in the first processing unit. The reference image may be an image of a reference plane illuminated by the laser when the camera is calibrated. The reference image may carry reference depth information. The depth image may be obtained by through a calculation based on the reference image and the speckle image.

The block of calculating the depth image may specifically include the following. A reference image stored in the first processing unit is obtained. The reference image is compared with the speckle image to obtain offset information. The offset information may be configured to represent a horizontal offset of a speckle spot in the speckle image relative to a corresponding speckle spot of the reference image. The depth image may be calculated based on the offset information and the reference depth information.

FIG. 8 is a schematic diagram of calculating depth information according to an embodiment of the present disclosure. As illustrated in FIG. 8, the laser 802 may generate laser speckles. After the laser speckle is reflected by the object, the image of the object may be captured by the laser camera 804. During the calibration of the camera, the laser speckle emitted by the laser 802 may be reflected by the reference plane 808. The reflected light may be captured by the laser camera 804. The reference image may be obtained on the imaging plane 810. A distance from the reference plane 808 to the laser light 802 may be a reference depth of L. The reference depth may be known. In a process of actual calculation of the depth information, the laser speckle emitted by the laser 802 may be reflected by the object 806. The reflected light may be captured by the laser camera 804. The actual speckle image may be obtained on the imaging plane 810. The actual depth information may be calculated as:

$$Dis = \frac{CD \times L \times f}{L \times AB + CD \times f} \quad \text{formula (1)}$$

where, L denotes a distance between the laser 802 and the reference plane 808, f denotes a focal length of the lens in the laser camera 804, CD denotes a distance between the laser 802 and the laser camera 804, and AB denotes an offset distance between an image of the object and an image of the reference plane 808. The value of AB may be a product of a pixel offset n and an actual distance p of the pixel. In response to detecting that the distance Dis between the object 804 and the laser 802 is greater than the distance L between the reference plane 806 and the laser 802, the value of AB is negative. In response to detecting that the distance Dis between the object 804 and the laser 802 is less than the distance L between the reference plane 806 and the laser 802, the value of AB is positive.

In detail, the above method for capturing image may include the following. The image capturing instruction is sent by the application to the camera driver. The image capturing instruction carries a type identifier. The camera driver turns on the camera based on the image capturing instruction. The camera driver generates the control instruction based on the type identifier and sends the control instruction to the first processing unit. The first processing unit turns on the corresponding light emitter based on the type identifier carried in the control instruction. The raw image of the object illuminated by the light emitter is captured by the camera.

With the method for capturing an image according to embodiments of the present disclosure, after the application initiates the image capturing instruction, the camera driver may turn on the camera. The control instruction for turning on the light emitter may be sent by the trusted application in the security execution environment, such that the image of the object illuminated by the light emitter may be captured by the camera. When the image is captured, the control instruction for turning on the light emitter may be sent by the trusted application in the security execution environment, to prevent other malicious programs from operating on the light emitter, to improve the security of the process of capturing the image.

It should be understood, although blocks of the flowcharts illustrated in FIGS. 11, 12, 15 and 16 are sequentially displayed based on indications of arrows, these blocks are not necessarily performed in the order indicated by the arrows. Otherwise explicitly stated herein, the execution of these blocks is not strictly limited, and the blocks may be performed in other orders. Moreover, at least some of the blocks in FIGS. 11, 12, 15 and 16 may include multiple sub-steps or stages, which are not necessarily performed simultaneously, but may be at different times. The order of execution of these sub-steps or stages is not necessarily performed sequentially, but may be performed in turn or alternately with at least a portion of other steps or sub-steps or stages of other steps.

FIG. 9 is a schematic diagram illustrating hardware for implementing a method for capturing an image according to an embodiment of the present disclosure. As illustrated in FIG. 9, the electronic device may include a camera module 910, a central processing unit (CPU) 920, and a microcontroller unit (MCU) 930. The camera module 910 may include a laser camera 912, a floodlight 914, a RGB (Red/Green/Blue, red/green/blue color mode) camera 916 and a laser 918. The microcontroller unit 930 may include a PWM module 932, a SPI/I2C (serial peripheral interface/inter-integrated circuit) module 934, a RAM (random access memory) module 936, and a depth engine module 938. The first processing unit may be the microcontroller unit 930, and the second processing unit may be the CPU core in the TEE 924. It may be understood that the central processing unit 920 may be in a multi-core operating mode, and the CPU core in the central processing unit 920 may operate in the TEE 924 or REE 922. Both the TEE 924 and REE 922 are operating modes of the ARM (advanced reduced instruction set processor machines) module. In general, an operation of a high-security of the electronic devices needs to be performed in the TEE 924, and other operations may be performed in the REE 922.

FIG. 10 is a block diagram illustrating a device for capturing an image according to an embodiment of the present disclosure. As illustrated in FIG. 10, the device 1000 for processing an image may include an instruction initiating module 1002, a camera control module 1004, an instruction sending module 1006, a light emitter control module 1008, and an image capturing module 1010.

The instruction initiating module 1002 may be configured to send an image capturing instruction to the camera driver through an application. The image capturing instruction may carry a type identifier, the type identifier may be configured to indicate a type of the target image to be captured by the application.

The camera control module 1004 may be configured to turn on the camera by the camera driver based on the image capturing instruction.

The instruction sending module 1006 may be configured to generate by the camera driver a control instruction based on the type identifier, send the control instruction to the trusted application in a security execution environment, and send the control instruction by the trusted application to the first processing unit.

The light emitter control module 1008 may be configured to turn on by the first processing unit, a corresponding light emitter based on the type identifier carried in the control instruction.

The image capturing module 1010 may be configured to capture by the camera a target image of an object illuminated by the light emitter.

With the device for capturing an image according to embodiments of the present disclosure, after the application initiates the image capturing instruction, the camera driver may turn on the camera. The control instruction for turning on the light emitter may be sent by the trusted application in the security execution environment, such that the image of the object illuminated by the light emitter may be captured by the camera. When the image is captured, the control instruction for turning on the light emitter may be sent by the trusted application in the security execution environment, to prevent other malicious programs from operating on the light emitter, to improve the security of the process of capturing the image.

In an embodiment, the image capturing instruction carries a mode identifier. The instruction sending module 1006 may be further configured to, in response to detecting that the mode identifier is a security mode, generate by camera driver a control instruction based on the type identifier and send the control instruction to the trusted application in the security execution environment; and send the control instruction by the trusted application to the first processing unit via a secure serial peripheral interface.

In an embodiment, the light emitter may include a first light emitter and/or a second light emitter. The light emitter control module 1008 may be further configured to, in response to detecting that the type identifier carried in the control instruction is a first type identifier, control by the first processing unit to turn on the first light emitter; in response to detecting that the type identifier carried in the control instruction is a second type identifier or a third type identifier, control by the first processing unit to turn on the second light emitter.

In an embodiment, the light emitter control module 1008 may be further configured to select a corresponding controller based on the type identifier carried in the control instruction by the first processing unit, input a pulse width modulation (PWM) to the controller; and turn on the light emitter connected to the controller with the pulse width modulation (PWM).

In an embodiment, the image capturing module 1010 may be further configured to capture by the camera a raw image of the object illuminated by the light emitter, send the raw image to the first processing unit; and obtain the target image in the first processing unit from the raw image.

In an embodiment, the image capturing module 1010 may be further configured to, in response to detecting that the type identifier is a first type identifier, control the camera to capture an infrared image of the object illuminated by the first light emitter and send the infrared image to the first processing unit; in response to detecting that the type identifier is a second type identifier or a third type identifier, control the camera to capture a speckle image of the object illuminated by the second light emitter, and send the speckle image to the first processing unit.

In an embodiment, the image capturing module 1010 may be further configured to, in response to detecting that the type identifier is a first type identifier, calibrate the infrared image in the first processing unit, and determine the calibrated infrared image as the target image; in response to detecting that the type identifier is a second type identifier, calibrate the speckle image in the first processing unit and determine the calibrated speckle image as the target image; in response to detecting that the type identifier is a third type identifier, obtain a reference image stored in the first processing unit, calculate a depth image based on the speckle image and the reference image, calibrate the depth image, and determine the calibrated depth image as the target image.

In an embodiment, the device 1000 for capturing an image may further include an image processing module. The image processing module may be configured to send the target image to a second processing unit, and process the target image with the second processing unit. The first processing unit and the second processing unit are both in the security execution environment. The second processing unit sends a processing result to the application.

The division of each module in the above device for capturing an image is for illustrative purposes only. In another embodiment, the device for capturing an image may be divided into different modules as needed to implement all or part of functions of the device for capturing an image.

Embodiments of the present application further provide a computer readable storage medium. One or more non-transitory computer readable storage media containing computer executable instructions that, when executed by one or more processors, cause the one or more processors to perform the method for capturing an image provided in the first implementation and the second implementation.

Embodiments of the present application further provide a computer program product including instructions that, when running on a computer, cause the computer to execute the above method for capturing an image provided in the first implementation and the second implementation.

As illustrated in FIG. 17, embodiments of the present application further provide a computer readable storage medium 220 having a computer program is stored thereon. When the computer program is executed by the processor 212, the method for capturing an image provided in the first implementation and the second implementation may be executed.

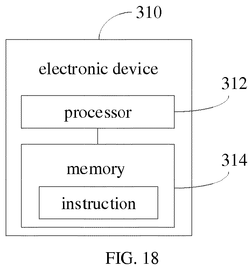

As illustrated in FIG. 18, embodiments of the present application further provide an electronic device 310. The electronic device 310 includes a memory 314 and a processor 312. The memory 314 has computer readable instructions stored thereon. When the instructions are executed by the processor 312, the processor 312 is caused to perform the method for capturing an image provided in the first implementation and the second implementation.

Any reference to memory, storage, database or other medium used herein may include non-volatile and/or volatile memory. Suitable non-volatile memories can include read only memory (ROM), programmable ROM (PROM), electrically programmable ROM (EPROM), electrically erasable programmable ROM (EEPROM), or flash memory. Volatile memory can include random access memory (RAM), which acts as an external cache. By way of illustration and not limitation, RAM is available in a variety of formats, such as static RAM (SRAM), dynamic RAM (DRAM), synchronous DRAM (SDRAM), double data rate SDRAM (DDR SDRAM), enhanced SDRAM (ESDRAM), synchlink DRAM (SLDRAM), Rambus direct RAM (RDRAM), direct Rambus dynamic RAM (DRDRAM), and Rambus dynamic RAM (RDRAM).

**Claims**

1. A method for capturing an image, comprising:

sending (1202; 1302; 2202; 2302), by an application (1502; 2502), an image capturing instruction to a camera driver (1510; 2510), the image capturing instruction carrying a type identifier and a mode identifier, and the type identifier being configured to represent a type of a target image to be captured by the application (1502; 2502);
turning on (1204; 1304; 2204; 2304), by the camera driver (1510; 2510), a camera (1504; 2504) based on the image capturing instruction;
generating (1206), by the camera driver (1510; 2510), a control instruction based on the type identifier, and sending, by the camera driver (15010; 2510), the control instruction to a first processing unit (1506; 2506), comprising:

in response to detecting that the mode identifier is a non-security mode, generating (1306), by the camera driver (1510; 2510), the control instruction based on the type identifier; and sending (1308), by the camera driver (1510; 2510), the control instruction to the first processing unit by a serial peripheral interface, wherein the camera driver (1510; 2510) connects to the first processing unit through the serial peripheral interface; and
in response to detecting that the mode identifier is a security mode, generating (2306), by the camera driver (1510; 2510), the control instruction based on the type identifier, and sending the control instruction to a trusted application (1512; 2512) in a security execution environment; and sending (2308), by the trusted application (1512; 2512), the control instruction to the first processing unit (1506; 2506) by a secure serial peripheral interface, wherein the trusted application is in a core of a second processing unit, and the second processing unit connects to the first processing unit (1506; 2506) through the secure serial peripheral interface;

turning on (1208; 2208), by the first processing unit (1506; 2506), a light emitter (1508; 2508) based on the type identifier carried in the control instruction; and
capturing (1210; 2210), by the camera (1504; 2504), the target image of an object illuminated by the light emitter (1508; 2508).

2. The method of claim 1, wherein the light emitter (1508; 2508) comprises a first light emitter and a second light emitter; and
the turning on (1208; 2208), by the first processing unit (1506; 2506), the light emitter (1508; 2508) based on the type identifier carried in the control instruction comprises:

in response to detecting that the type identifier carried in the control instruction is a first type identifier, turning on, by the first processing unit (1506; 2506), the first light emitter; and
in response to detecting that the type identifier carried in the control instruction is a second type identifier or a third type identifier, turning on, by the first processing unit (1506; 2506), the second light emitter.

3. The method of claim 1 or 2, wherein the turning on (1208; 2208), by the first processing unit (1506; 2506), the light emitter (1508; 2508) based on the type identifier carried in the control instruction comprises:

selecting (2310), by the first processing unit (1506; 2506), a controller based on the type identifier carried in the control instruction and inputting a pulse width modulation to the controller; and
turning on (2312) the light emitter (1508; 2508) connected to the controller with the pulse width modulation.

4. The method of any one of claims 1 to 3, wherein the capturing (1210; 2210), by the camera (1504; 2504), the target image of the object illuminated by the light emitter (1508; 2508) comprises:

capturing, by the camera (1504; 2504), a raw image of the object illuminated by the light emitter (1508; 2508), and sending the raw image to the first processing unit (1506; 2506); and
obtaining (1316; 2316) the target image in the first processing unit based on the raw image.

5. The method of claim 4, wherein the capturing, by the camera (1504; 2504), the raw image of the object illuminated by the light emitter (1508; 2508) and sending the raw image to the first processing unit (1506; 2506) comprises:

in response to detecting that the type identifier is a first type identifier, controlling (1602; 2602) the camera (1504; 2504) to capture an infrared image of the object illuminated by a first light emitter, and sending the infrared image to the first processing unit (1506; 2506);
in response to detecting that the type identifier is a second type identifier or a third type identifier, controlling (1604; 2604) the camera (1504; 2504) to collect a speckle image of the object illuminated by a second light emitter, and sending the speckle image to the first processing unit (1506; 2506).

6. The method of claim 4, wherein the obtaining (1316; 2316) the target image in the first processing unit (1506; 2506) based on the raw image comprises:

in response to detecting that the type identifier is the first type identifier, calibrating (1702; 2702), in the first processing unit (1506; 2506), the infrared image based on a calibration algorithm by eliminating parallax between infrared images captured by multiple cameras placed at different positions and determining a calibrated infrared image captured by the camera as the target image;
in response to detecting that the type identifier is the second type identifier, calibrating (1704; 2704), in the first processing unit (1506; 2506), the speckle image based on a calibration algorithm by eliminating parallax between speckle images captured by multiple cameras placed at different positions and determining a calibrated speckle image captured by the camera as the target image; and
in response to detecting that the type identifier is the third type identifier, obtaining (1706; 2706) a reference image stored in the first processing unit (1506; 2506), calculating a depth image based on the speckle image and the reference image, calibrating the depth image based on a calibration algorithm by eliminating parallax between depth images captured by multiple cameras placed at different positions and determining a calibrated depth image captured by the camera as the target image.

7. The method of any one of claims 4 to 6, further comprising:

in response to determining that the target image is a preset image type, sending (1318) the target image to the camera driver (1510; 2510); and
processing (1320), by the camera driver (1510; 2510), the target image and sending a processing result to the application (1502; 2502).

8. A computer readable storage medium (220), having a computer program stored thereon, wherein when the computer program is executed by a processor (212), a method of any one of claims 1 to 7 is executed.

9. An electronic device (104; 210; 310), comprising a memory (314),

a processor (212; 312), an application (1502; 250), a camera driver (1510; 2510), a first processing unit (1506; 2506), a trusted application (1512; 2512), a serial peripheral interface, a secure serial peripheral interface, and a light emitter (1508; 2508), wherein

the memory (314) is configured to store computer readable instructions, when the instructions are executed by the processor (212; 312), a method of any one of claims 1 to 7 is executed by the processor.

**Patentansprüche**

1. Verfahren zum Aufnehmen eines Bildes, umfassend:

Senden (1202; 1302; 2202; 2302) einer Bildaufnahmeanweisung von einer Anwendung (1502; 2502) zu einem Kameratreiber (1510; 2510), wobei die Bildaufnahmeanweisung eine Typkennung und eine Moduskennung mitführt, und wobei die Typkennung konfiguriert ist zum Repräsentieren eines Typs eines durch die Anwendung (1502; 2502) aufzunehmenden Zielbildes; Einschalten (1204; 1304; 2204; 2304), durch den Kameratreiber (1510; 2510), einer Kamera (1504; 2504) aufgrund der Bildaufnahmeanweisung; Erzeugen (1206), durch den Kameratreiber (1510; 2510), einer Steueranweisung aufgrund der Typkennung, und Senden der Steueranweisung von dem Kameratreiber (15010; 2510) zu einer ersten Verarbeitungseinheit (1506; 2506), wobei das Erzeugen umfasst:

als Reaktion auf ein Erkennen, dass die Moduskennung ein Nicht-Sicherheitsmodus ist, Erzeugen (1306), durch den Kameratreiber (1510; 2510), der Steueranweisung aufgrund der Typkennung; und Senden (1308) der Steueranweisung von dem Kameratreiber (1510; 2510) durch eine serielle periphere Schnittstelle zu der ersten Verarbeitungseinheit, wobei der Kameratreiber (1510; 2510) durch die serielle periphere Schnittstelle mit der ersten Verarbeitungseinheit verbunden ist; und als Reaktion auf ein Erkennen, dass die Moduskennung ein Sicherheitsmodus ist, Erzeugen (2306), durch den Kameratreiber (1510; 2510), der Steueranweisung aufgrund der Typkennung, und Senden der Steueranweisung zu einer vertrauenswürdigen Anwendung (1512; 2512) in einer Sicherheitsausführungsumgebung; und Senden (2308) der Steueranweisung von der vertrauenswürdigen Anwendung (1512; 2512) durch eine sichere serielle periphere Schnittstelle zu der ersten Verarbeitungseinheit (1506; 2506), wobei sich die vertrauenswürdige Anwendung in einem Kern einer zweiten Verarbeitungseinheit befindet, und wobei die zweite Verarbeitungseinheit durch die sichere serielle periphere Schnittstelle mit der ersten Verarbeitungseinheit (1506; 2506) verbunden ist;

Einschalten (1208; 2208), durch die erste Verarbeitungseinheit (1506; 2506), eines Lichtemitters (1508; 2508) aufgrund der Typkennung, die in der Steueranweisung mitgeführt wird; und Aufnehmen (1210; 2210), durch die Kamera (1504; 2504), des Zielbildes eines Objekts, das von dem Lichtemitter (1508; 2508) beleuchtet wird.

2. Verfahren nach Anspruch 1, wobei der Lichtemitter (1508; 2508) einen ersten Lichtemitter und einen zweiten Lichtemitter umfasst; und wobei das Einschalten (1208; 2208), durch die erste Verarbeitungseinheit (1506; 2506), des Lichtemitters (1508; 2508) aufgrund der Typkennung, die in der Steueranweisung mitgeführt wird, umfasst:

als Reaktion auf ein Erkennen, dass die Typkennung, die in der Steueranweisung mitgeführt wird, eine erste Typkennung ist, Einschalten, durch die erste Verarbeitungseinheit (1506; 2506), des ersten Lichtemitters; und als Reaktion auf ein Erkennen, dass die Typkennung, die in der Steueranweisung mitgeführt wird, eine zweite Typkennung oder eine dritte Typkennung ist, Einschalten, durch die erste Verarbeitungseinheit (1506; 2506), des zweiten Lichtemitters.

3. Verfahren nach Anspruch 1 oder 2, wobei das Einschalten (1208; 2208), durch die erste Verarbeitungseinheit (1506; 2506), des Lichtemitters (1508; 2508) aufgrund der Typkennung, die in der Steueranweisung mitgeführt wird, umfasst:

Auswählen (2310), durch die erste Verarbeitungseinheit (1506; 2506), einer Steuereinheit aufgrund der Typkennung, die in der Steueranweisung mitgeführt wird, und Eingeben einer Pulsbreitenmodulation in die Steuereinheit; und Einschalten (2312) des Lichtemitters (1508; 2508), der mit der Steuereinheit mit der Pulsbreitenmodulation verbunden ist.

4. Verfahren nach einem der Ansprüche 1 bis 3, wobei das Aufnehmen (1210; 2210), durch die Kamera (1504; 2504), des Zielbildes des Objekts, das von dem Lichtemitter (1508; 2508) beleuchtet wird, umfasst:

> Aufnehmen, durch die Kamera (1504; 2504), eines Rohbildes des Objekts, das von dem Lichtemitter (1508; 2508) beleuchtet wird, und Senden des Rohbildes an die erste Verarbeitungseinheit (1506; 2506); und
> Erhalten (1316; 2316) des Zielbildes in der ersten Verarbeitungseinheit aufgrund des Rohbildes.

5. Verfahren nach Anspruch 4, wobei das Aufnehmen, durch die Kamera (1504; 2504), des Rohbildes des Objekts, das von dem Lichtemitter (1508; 2508) beleuchtet wird, und das Senden des Rohbildes zu der ersten Verarbeitungseinheit (1506; 2506) umfassen:

> als Reaktion auf ein Erkennen, dass die Typkennung eine erste Typkennung ist, Steuern (1602; 2602) der Kamera (1504; 2504), um ein Infrarotbild des Objekts aufzunehmen, das von dem ersten Lichtemitter beleuchtet wird, und Senden des Infrarotbildes zu der ersten Verarbeitungseinheit (1506; 2506);
> als Reaktion auf ein Erkennen, dass die Typkennung eine zweite Typkennung oder eine dritte Typkennung ist, Steuern (1604; 2604) der Kamera (1504; 2504), um ein Specklebild des Objekts aufzunehmen, das von dem zweiten Lichtemitter beleuchtet wird, und Senden des Specklebildes zu der ersten Verarbeitungseinheit (1506; 2506) .

6. Verfahren nach Anspruch 4, wobei das Erhalten (1316; 2316) des Zielbildes in der ersten Verarbeitungseinheit (1506; 2506) aufgrund des Rohbildes umfasst:

> als Reaktion auf ein Erkennen, dass die Typkennung die erste Typkennung ist, Kalibrieren (1702; 2702), in der ersten Verarbeitungseinheit (1506; 2506), des Infrarotbildes aufgrund eines Kalibrierungsalgorithmus, indem eine Parallaxe zwischen den Infrarotbildern eliminiert wird, die durch mehrere Kameras aufgenommen werden, die an unterschiedlichen Positionen platziert sind, und Ermitteln eines kalibrierten Infrarotbildes, das von der Kamera aufgenommen wurde, als das Zielbild;
> als Reaktion auf ein Erkennen, dass die Typkennung die zweite Typkennung ist, Kalibrieren (1704; 2704), in der ersten Verarbeitungseinheit (1506; 2506), des Specklebildes aufgrund eines Kalibrierungsalgorithmus, indem eine Parallaxe zwischen den Specklebildern eliminiert wird, die durch mehrere Kameras aufgenommen werden, die an unterschiedlichen Positionen platziert sind, und Ermitteln eines kalibrierten Specklebildes, das von der Kamera aufgenommen wurde, als das Zielbild; und
> als Reaktion auf ein Erkennen, dass die Typkennung die dritte Typkennung ist, Erhalten (1706; 2706) eines Referenzbildes, das in der ersten Verarbeitungseinheit (1506; 2506) gespeichert wird, Berechnen eines Tiefenbildes aufgrund des Specklebildes und des Referenzbildes, Kalibrieren des Tiefenbildes aufgrund eines Kalibrierungsalgorithmus, indem eine Parallaxe zwischen Tiefenbildern eliminiert wird, die durch mehrere Kameras aufgenommen werden, die an unterschiedlichen Positionen platziert sind, und Ermitteln eines kalibrierten Tiefenbildes, das von der Kamera aufgenommen wurde, als das Zielbild.

7. Verfahren nach einem der Ansprüche 4 bis 6, der außerdem umfasst:

> als Reaktion auf das Ermitteln, dass das Zielbild ein voreingestellter Bildtyp ist, Senden (1318) des Zielbildes zu dem Kameratreiber (1510; 2510); und
> Verarbeiten (1320), durch den Kameratreiber (1510; 2510), des Zielbildes und Senden des Verarbeitungsergebnisses zu der Anwendung (1502; 2502).

8. Computerlesbares Speichermedium (220), in dem ein Computerprogramm gespeichert ist, wobei, wenn das Computerprogramm von einem Prozessor (212) ausgeführt wird, ein Verfahren nach einem der Ansprüche 1 bis 7 ausgeführt wird.

9. Elektronische Vorrichtung (104; 210; 310), die einen Speicher (314), einen Prozessor (212; 312), eine Anwendung (1502; 250), einen Kameratreiber (1510; 2510), eine erste Verarbeitungseinheit, (1506; 2506), eine vertrauenswürdige Anwendung (1512; 2512), eine serielle periphere Schnittstelle, eine sichere serielle periphere Schnittstelle und einen Lichtemitter (1508; 2508) umfasst, wobei
der Speicher (314) konfiguriert ist zum Speichern von computerlesbaren Anweisungen, wobei, wenn die Anweisungen von dem Prozessor (212; 312) ausgeführt werden, ein Verfahren nach einem der Ansprüche 1 bis 7 durch den Prozessor ausgeführt wird.

**Revendications**

1. Procédé de capture d'une image, comprenant :

> l'envoi (1202 ; 1302 ; 2202 ; 2302), par une application (1502 ; 2502), d'une instruction de capture d'image à un pilote de caméra (1510 ; 2510), l'instruction de capture d'image transportant un identifiant de type et un identifiant de mode, et l'identifiant de type étant configuré pour représenter un type d'une image cible devant être capturée par l'application (1502 ; 2502) ; l'activation (1204 ; 1304 ; 2204 ; 2304), par le pilote de caméra (1510 ; 2510), d'une caméra (1504 ; 2504) sur la base de l'instruction de capture d'image ;

la génération (1206), par le pilote de caméra (1510 ; 2510), d'une instruction de commande sur la base de l'identifiant de type, et l'envoi, par le pilote de caméra (15010 ; 2510),

de l'instruction de commande à une première unité de traitement (1506 ; 2506), comprenant :

en réponse à la détection du fait que l'identifiant de mode est un mode non sécurisé, la génération (1306), par le pilote de caméra (1510 ; 2510), de l'instruction de commande sur la base de l'identifiant de type ; et l'envoi (1308), par le pilote de caméra (1510 ; 2510), de l'instruction de commande à la première unité de traitement par une interface périphérique série, dans lequel le pilote de caméra (1510 ; 2510) se connecte à la première unité de traitement par l'intermédiaire de l'interface périphérique série ; et

en réponse à la détection du fait que l'identifiant de mode est un mode sécurisé, la génération (2306), par le pilote de caméra (1510 ; 2510), de l'instruction de commande sur la base de l'identifiant de type, et l'envoi de l'instruction de commande à une application de confiance (1512 ; 2512) dans un environnement d'exécution sécurisé ; et l'envoi (2308), par l'application de confiance (1512 ; 2512), de l'instruction de commande à la première unité de traitement (1506 ; 2506) par une interface périphérique série sécurisée, dans lequel l'application de confiance se trouve dans un noyau d'une seconde unité de traitement, et la seconde unité de traitement se connecte à la première unité de traitement (1506 ; 2506) par l'intermédiaire de l'interface périphérique série sécurisée ; l'activation (1208 ; 2208), par la première unité de traitement (1506 ; 2506), d'un émetteur de lumière (1508 ; 2508) sur la base de l'identifiant de type transporté dans l'instruction de commande ; et la capture (1210 ; 2210), par la caméra (1504 ; 2504), de l'image cible d'un objet éclairé par l'émetteur de lumière (1508 ; 2508).

2. Procédé selon la revendication 1, dans lequel l'émetteur de lumière (1508 ; 2508) comprend un premier émetteur de lumière et un deuxième émetteur de lumière ; et

l'activation (1208 ; 2208), par la première unité de traitement (1506 ; 2506), de l'émetteur de lumière (1508 ; 2508) sur la base de l'identifiant de type transporté dans l'instruction de commande comprend :

en réponse à la détection du fait que l'identifiant de type transporté dans l'instruction de commande est un premier identifiant de type, l'activation, par la première unité de traitement (1506 ; 2506), du premier émetteur de lumière ; et

en réponse à la détection du fait que l'identifiant de type transporté dans l'instruction de commande est un deuxième identifiant de type ou un troisième identifiant de type, l'activation par la première unité de traitement (1506 ; 2506), du deuxième émetteur de lumière.

3. Procédé selon la revendication 1 ou 2, dans lequel l'activation (1208 ; 2208), par la première unité de traitement (1506 ; 2506), de l'émetteur de lumière (1508 ; 2508) sur la base de l'identifiant de type transporté dans l'instruction de commande comprend :

la sélection (2310), par la première unité de traitement (1506 ; 2506), d'un dispositif de commande sur la base de l'identifiant de type transporté dans l'instruction de commande et la fourniture en entrée d'une modulation de largeur d'impulsion au dispositif de commande ; et l'activation (2312) de l'émetteur de lumière (1508 ; 2508) connecté au dispositif de commande avec la modulation de largeur d'impulsion.

4. Procédé selon l'une quelconque des revendications 1 à 3, dans lequel la capture (1210 ; 2210), par la caméra (1504 ; 2504), de l'image cible de l'objet éclairé par l'émetteur de lumière (1508 ; 2508) comprend :

la capture, par la caméra (1504 ; 2504), d'une image brute de l'objet éclairé par l'émetteur de lumière (1508 ; 2508), et l'envoi de l'image brute à la première unité de traitement (1506 ; 2506) ; et

l'obtention (1316 ; 2316) de l'image cible dans la première unité de traitement sur la base de l'image brute.

5. Procédé selon la revendication 4, dans lequel la capture, par la caméra (1504 ; 2504), de l'image brute de l'objet éclairé par l'émetteur de lumière (1508 ; 2508) et l'envoi de l'image brute à la première unité de traitement (1506 ; 2506) comprennent :

en réponse à la détection du fait que l'identifiant de type est un premier identifiant de type, la commande (1602 ; 2602) de la caméra (1504 ; 2504) pour capturer une image infrarouge de l'objet éclairé par un premier émetteur de lumière, et l'envoi de l'image infrarouge à la première unité de traitement (1506 ; 2506) ;

en réponse à la détection du fait que l'identifiant de type est un deuxième identifiant de type ou un troisième identifiant de type, la commande (1604 ; 2604) de la caméra (1504 ; 2504) pour collecter une image de tavelures de l'objet éclairé par un deuxième émetteur de lumière, et l'envoi de l'image de tavelures à la première unité de traitement (1506 ; 2506).

6. Procédé selon la revendication 4, dans lequel l'obtention (1316 ; 2316) de l'image cible dans la première unité de traitement (1506 ; 2506) sur la base de l'image brute comprend :

en réponse à la détection du fait que l'identifiant de type est le premier identifiant de type, l'étalonnage (1702 ; 2702), dans la première unité de traitement (1506 ; 2506), de l'image infrarouge sur la base d'un algorithme d'étalonnage en éliminant la parallaxe entre des images infrarouges capturées par plusieurs caméras placées à des positions différentes et en déterminant une image infrarouge étalonnée capturée par la caméra comme étant l'image cible ;

en réponse à la détection du fait que l'identifiant de type est le deuxième identifiant de type, l'étalonnage (1704 ; 2704), dans la première unité de traitement (1506 ; 2506), de l'image de tavelures sur la base d'un algorithme d'étalonnage en éliminant la parallaxe entre des images de tavelures capturées par plusieurs caméras placées à des positions différentes et la détermination d'une image de tavelures étalonnée capturée par la caméra comme étant l'image cible ; et

en réponse à la détection du fait que l'identifiant de type est le troisième identifiant de type, l'obtention (1706 ; 2706) d'une image de référence stockée dans la première unité de traitement (1506 ; 2506), le calcul d'une image de profondeur sur la base de l'image de tavelures et de l'image de référence, l'étalonnage de l'image de profondeur sur la base d'un algorithme d'étalonnage en éliminant la parallaxe entre des images de profondeur capturées par plusieurs caméras placées à des positions différentes et la détermination d'une image de profondeur étalonnée capturée par la caméra comme étant l'image cible.

7. Procédé selon l'une quelconque des revendications 4 à 6, comprenant en outre :

en réponse à la détermination du fait que l'image cible est un type d'image prédéfini, l'envoi (1318) de l'image cible au pilote de caméra (1510 ; 2510) ; et
le traitement (1320), par le pilote de caméra (1510 ; 2510), de l'image cible et l'envoi d'un résultat de traitement à l'application (1502 ; 2502).

8. Support de stockage lisible par ordinateur (220), sur lequel est stocké un programme informatique, dans lequel, lorsque le programme informatique est exécuté par un processeur (212), un procédé selon l'une quelconque des revendications 1 à 7 est exécuté.

9. Dispositif électronique (104 ; 210 ; 310), comprenant une mémoire (314), un processeur (212 ; 312), une application (1502 ; 250), un pilote de caméra (1510 ; 2510), une première unité de traitement (1506 ; 2506), une application de confiance (1512 ; 2512), une interface périphérique série, une interface périphérique série sécurisée, et un émetteur de lumière (1508 ; 2508), dans lequel
la mémoire (314) est configurée pour stocker des instructions lisibles par ordinateur, et lorsque les instructions sont exécutées par le processeur (212 ; 312), un procédé selon l'une quelconque des revendications 1 à 7 est exécuté par le processeur.

FIG. 1

1202

sending, by an application, an image capturing instruction to a camera driver, the image capturing instruction carrying a type identifier, and the type identifier being configured to represent a type of a target image to be captured by the application

1204

turning on, by the camera driver, a camera based on the image capturing instruction

1206

generating, by the camera driver, a control instruction based on the type identifier, and sending, by the camera driver, the control instruction to a processing unit

1208

turning on, by the processing unit, a corresponding light emitter based on the type identifier carried in the control instruction

1210

capturing, by the camera, the target image of an object illuminated by the light emitter

FIG. 2

24

sending, by an application, an image capturing instruction to a camera driver, the image capturing instruction carrying a type identifier, and the type identifier being configured to represent a type of a target image to be captured by the application — 1302

turning on, by the camera driver, a camera based on the image capturing instruction — 1304

in response to detecting that the mode identifier is a non-security mode, generating, by the camera driver, the control instruction based on the type identifier — 1306

sending the control instruction to the processing unit through a serial peripheral interface — 1308

selecting, by the processing unit a corresponding controller based on the type identifier carried in the control instruction and inputting a pulse width modulation (PWM) to the controller — 1310

turning on the light emitter connected to the controller with the pulse width modulation (PWM) — 1312

capturing, by the camera, a raw image of the object illuminated by the light emitter, and sending the raw image to the processing unit — 1314

obtaining the target image in the processing unit based on the raw image — 1316

in response to determining that the target image is a preset image type, sending the target image to the camera driver — 1318

processing, by the camera driver, the target image and sending a processing result to the application — 1320

FIG. 3

1402

processing unit

PWM2                              PWM1

1406                                             1404
second
controller                    first controller

1410                                             1408
laser                         floodlight

FIG. 4

REE                                    TEE

1502
application

1504
camera                    camera
driver          1510        trusted          1512
                                      application

1506
processing
unit

1508
light emitter

FIG. 5

1602

in response to detecting that the type identifier is the first type
identifier, controlling the camera to capture an infrared image of the
object illuminated by the first light emitter, and sending the infrared
image to the processing unit

1604

in response to detecting that the type identifier is the second type
identifier or the third identifier, controlling the camera to collect a
speckle image of the object illuminated by the second light emitter, and
sending the speckle image to the processing unit

FIG. 6

1702

in response to detecting that the type identifier is the first type identifier, calibrating, in the processing unit, the infrared image and determining a calibrated infrared image as the target image

1704

in response to detecting that the type identifier is the second type identifier, calibrating, in the processing unit, the speckle image and determining a calibrated speckle image as the target image

1706

in response to detecting that the type identifier is the third type identifier, obtaining a reference image stored in the processing unit, calculating a depth image based on the speckle image and the reference image, calibrating the depth image and determining a calibrated depth image as the target image

FIG. 7

810

808

A

B

C

804

806

E

Dis

D

F

802

L

G

FIG. 8

910

camera module

912     914     916     918

| laser camera | floodlight | RGB camera | laser |

920

CPU

930

MCU

932     934

PWM     SPI/I2C

SECURE SPI/I2C

rich execution environment 922

924

936

RAM

trusted execution environment

938

Depth Engine

FIG. 9

device 1000 for processing an image

1002

instruction initiating module

1004

camera controlling module

1006

instruction sending module

1008

light emitter control module

1010

image capturing module

FIG. 10

2202

sending, by an application, an image capturing instruction to a camera driver, the image capturing instruction carrying a type identifier, and the type identifier being configured to represent a type of a target image to be captured by the application

2204

turning on, by the camera driver, a camera based on the image capturing instruction

2206

generating, by the camera driver the control instruction based on the type identifier, sending the control instruction to a trusted application in a security execution environment, and sending, by the trusted application the control instruction to a first processing unit

2208

turning on, by the first processing unit, the corresponding light emitter based on the type identifier carried in the control instruction

2210

capturing, by the camera, the target image of an object illuminated by the light emitter

FIG. 11

2302

sending. by an application, an image capturing instruction to a camera driver, the image capturing instruction carrying a type identifier, and the type identifier being configured to represent a type of a target image to be captured by the application

2304

turning on, by the camera driver, a camera based on the image capturing instruction

2306

in response to detecting that the mode identifier is a security mode, generating, by the camera driver the control instruction based on the type identifier, and sending the control instruction to the trusted application in the security execution environment

2308

sending, by the trusted application the control instruction through a secure serial peripheral interface to the first processing unit

2310

selecting, by the first processing unit a corresponding controller based on the type identifier carried in the control instruction, and inputting a pulse width modulation (PWM) to the controller

2312

turning on the light emitter connected to the controller with the pulse width modulation (PWM)

2314

capturing, by the camera the raw image of the object illuminated by the light emitter, and sending the raw image to the first processing unit

2316

obtaining the target image in the first processing unit based on the raw image

2318

sending the target image to a second processing unit, and processing the target image by the second processing unit, the first processing unit and the second processing unit being in the security execution environment

2320

returning, by the second processing unit, a processing result to the application

FIG. 12

2402

first processing unit

PWM2        PWM1

2406    second
        controller        first controller    2404

2410    laser            floodlight    2408

FIG. 13

REE                  TEE

2502    application

2504    camera    camera    2510    trusted    2512
                  driver           application

2506    first
        processing unit

2508    light emitter

FIG. 14

2602

in response to detecting that the type identifier is the first type identifier, controlling the camera to capture an infrared image of the object illuminated by the first light emitter, and sending the infrared image to the first processing unit

2604

in response to detecting that the type identifier is the second type identifier or the third type identifier, controlling the camera to capture a speckle image of the object illuminated by the second light emitter and sending the speckle image to the first processing unit

FIG. 15

2702

in response to detecting that the type identifier is the first type identifier, calibrating the infrared image in the first processing unit and determining a calibrated infrared image as the target image

2704

in response to detecting that the type identifier is the second type identifier, calibrating the speckle image in the first processing unit and determining a calibrated speckle image as the target image

2706

in response to detecting that the type identifier is the third type identifier, obtaining a reference image stored in the first processing unit, calculating a depth image based on the speckle image and the reference image, calibrating the depth image and determining a calibrated depth image as the target image

FIG. 16

210    220

| electronic device | computer readable storage medium |
| 212 | |
| processor | computer program |

FIG. 17

310

electronic device

processor 312

memory 314

instruction

FIG. 18

**EP 3 621 294 B1**

**Patent documents cited in the description**

- CN 107341481 A
- CN 107729836 A
- CN 108123793 A